# FASCICULE DE BREVET EUROPEEN

(11) **EP 3 713 422 B1**
(45) Date de publication et mention de la délivrance du brevet: **09.08.2023**
(21) Numéro de dépôt: 18800996.3
(22) Date de dépôt: 20.11.2018
(51) Int. Cl.: A23J 1/14, A23L 11/30

(54) **PROCÉDÉ DE TRAITEMENT DE GRAINES PROTÉAGINEUSES EN VUE D'AMÉLIORER LEUR VALORISATION À TITRE D'ALIMENTS**
VERFAHREN ZUR BEHANDLUNG VON HÜLSENFRUCHTSAMEN ZUR VERBESSERUNG IHRER EIGNUNG ALS LEBENSMITTEL
PROCESS FOR THE TREATMENT OF LEGUMINOUS GRAINS FOR THE IMPROVEMENT OF THEIR SUITABILITY AS FOODS

(30) Priorité: 21.11.2017 FR 1760978
(43) Date de publication de la demande: 30.09.2020
(73) Titulaire: Valorex, 35210 Combourtille (FR)
(72) Inventeur: CHESNEAU, Guillaume, 35133 Luitre (FR); GUILLEVIC, Mathieu, 35000 Rennes (FR); GERMAIN, Antoine, 35510 Cesson Sevigne (FR); JUIN, Hervé, 17700 Péré (FR); LESSIRE, Michel, 37380 Nouzilly (FR); CHAPOUTOT, Patrick, 95130 Franconville (FR); NOZIERE, Pierre, 63450 Tallende (FR); BUREL, Christine, 64210 Ahetze (FR); LABUSSIERE, Etienne, 35310 Cintre (FR)
(74) Mandataire: Regimbeau
(86) Numéro de dépôt international: PCT/EP2018/081972
(87) Numéro de publication internationale: WO 2019/101752

(56) Documents cités:
- WO-A1-2015/158959
- FR-A1- 3 040 588
- JEZIERNY D ET AL: "The use of grain legumes as a protein source in pig nutrition: A review", ANIMAL FEED SCIENCE AND TECHNOLOGY, ELSEVIER, AMSTERDAM, NL, vol. 157, no. 3-4, 11 mai 2010 (2010-05-11), pages 111-128, XP027006418, ISSN: 0377-8401 [extrait le 2010-04-14]
- PATRICIO SAEZ ET AL: "Effects of dehulling, steam-cooking and microwave-irradiation on digestive value of white lupin ( Lupinus albus ) seed meal for rainbow trout ( Oncorhynchus mykiss ) and Atlantic salmon ( Salmo salar )", ARCHIVES OF ANIMAL NUTRITION, vol. 69, no. 2, 4 mars 2015 (2015-03-04), pages 143-157, XP055472127, US ISSN: 1745-039X, DOI: 10.1080/1745039X.2015.1009613
- FRANCESCO MASOERO ET AL: "Effect of extrusion, espansion and toasting on the nutritional value of peas, faba beans and lupins", ITALIAN JOURNAL OF ANIMAL SCIENCE, vol. 4, no. 2, 1 janvier 2005 (2005-01-01) , pages 177-189, XP055472125, DOI: 10.4081/ijas.2005.177
- BOGUSLAW OLKOWSKI: "Lupin as primary protein source in young broiler chicken diets: Effect of enzymes preparations catalyzing degradation of non-starch polysaccharides or phytates", WORLD JOURNAL OF MICROBIOLOGY AND BIOTECHNOLOGY, KLUWER ACADEMIC PUBLISHERS, DO, vol. 27, no. 2, 8 juin 2010 (2010-06-08), pages 341-347, XP019872085, ISSN: 1573-0972, DOI: 10.1007/S11274-010-0464-X
- G.A. White ET AL: "Replacement of soya bean meal with peas and faba beans in growing/finishing pig diets: Effect on performance, carcass composition and nutrient excretion", ANIMAL FEED SCIENCE AND TECHNOLOGY, vol. 209, 1 November 2015 (2015-11-01), pages 202-210, XP055472136, AMSTERDAM, NL ISSN: 0377-8401, DOI: 10.1016/j.anifeedsci.2015.08.005

## Description

### DOMAINE DE L'INVENTION

La présente invention est relative à un procédé de traitement de graines protéagineuses en vue d'améliorer leur valorisation à titre d'aliments, notamment pour les animaux.

### ARRIERE PLAN TECHNOLOGIQUE DE L'INVENTION

L'alimentation des animaux de rente que sont les monogastriques tels que les volailles de chair et de ponte, les porcins, ou encore les ruminants, est fortement dépendante de l'incorporation de tourteaux de soja dans les rations. Cette matière première provient majoritairement d'Amérique du Sud, ce qui n'est pas sans poser des difficultés d'autonomie protéique et de durabilité, du fait notamment des enjeux de compétitivité en lien avec des attentes sociétales et environnementales fortes.

De par sa forte teneur en protéines, le tourteau de soja s'est largement imposé en tant que source de protéines pour l'alimentation animale. Aujourd'hui, les tourteaux de soja utilisés en France sont majoritairement importés et OGM, et leur traçabilité est remise en question (Gourdouvelis et al., 2012).

En parallèle, de nouvelles attentes sociétales émergent en France (diversité alimentaire, origine des produits, impact sur l'environnement, qualité des produits et aujourd'hui, le recours au soja en production animale est menacé par le risque d'une nouvelle crise sociétale (Delanoue et al., 2015).

En élevage, la satisfaction des besoins en protéines est indispensable à l'atteinte des objectifs de performances zootechniques. Cependant, près de la moitié des matières premières riches en protéines destinées à la nutrition animale en France est importée, dont l'essentiel correspond aux plus de 3 millions de tonnes de tourteau de soja par an (Bouvarel et al., 2014).

Du fait d'une Asie de plus en plus importatrice, la relative rareté et la volatilité des prix du soja impacte les revenus des éleveurs. Par conséquent, un des enjeux majeurs, pour les productions animales est d'en devenir moins dépendant et donc de trouver des alternatives pour réduire le recours à l'importation du tourteau de soja (Bourin et Bouvarel, 2015), tout en assurant la rentabilité économique des exploitations notamment en recherchant à optimiser les performances de leurs outils de production, mais aussi à tirer davantage profit de leurs produits.

Par ailleurs, concernant les animaux domestiques tels que les chiens et les chats, leurs propriétaires se préoccupent beaucoup de la qualité des aliments qu'ils leur achètent dans le but notamment de leur conférer de la vitalité et de les préserver de certaines maladies métaboliques et digestives, ou encore d'allergies.

Les besoins en protéines chez l'homme sont couverts aux deux-tiers par des protéines d'origine animale dans les pays occidentaux. Mais une nouvelle demande végétarienne se fait jour et l'apport des graines riches en protéines directement dans l'alimentation de l'homme est de plus en plus important. Les graines de soja représentent l'essentiel de ces apports, mais, pour les mêmes raisons physiologiques que chez les animaux, l'homme devrait pouvoir disposer de sources protéiques végétales sous forme de graines dont la valorisation nutritionnelle a été améliorée. Ainsi ce qui est décrit ci-dessous pour l'animal est vrai aussi pour l'homme. Dans les lignes ci-dessous et les revendications, il faut comprendre que l'homme fait partie des animaux mammifères monogastriques.

On observe en France un manque de diversité au sein des cultures, qui sont majoritairement des céréales et dont les rendements en protéines sont garantis par l'utilisation d'engrais azotés, et de pesticides (Messéan et al., 2014). Les agriculteurs sont ainsi à la recherche de systèmes de culture performants, durables et viables, grâce entre autres à des nouvelles têtes d'assolement moins consommatrices d'intrants (engrais azotés, pesticides) et des prix rémunérateurs.

De nombreux défis sont à l'ordre du jour pour répondre aux attentes multiples des consommateurs et des citoyens, à savoir :
- Une alimentation durable avec des avantages nutritionnels, plus de naturalité et de biodiversité et une large accessibilité;
- L'origine locale des productions agricoles et alimentaires ;
- Des modes de production non OGM ;
- La préservation de l'environnement avec moins d'émission de gaz à effet de serre, d'usage de produits phytosanitaires, etc.

Finalement, chaque maillon de la filière alimentaire exprime des attentes que l'on peut résumer à travers celles :
Des agriculteurs : allonger les rotations culturales, diversifier les assolements, rendre plus robuste leur système de production ;
Des éleveurs d'animaux de rente : produire et consommer localement la protéine des rations animales ;
Des propriétaires d'animaux domestiques : une alimentation équilibrée et saine ;
Des consommateurs : consommer « local », sans OGM, avec plus de densité nutritionnelle.

Mais il en existe d'autres, d'un rayonnement important, exprimés par :
Les institutionnels : limiter le recours aux importations de soja, aux engrais azotés et aux pesticides, et augmenter la production française et européenne de protéines végétales ;
Les entreprises de toute la filière alimentaire : en quête de différenciation et de valeur ajoutée dans un contexte économique tendu ;
Les entreprises para-agricoles : constitutives d'un large réseau de services et de produits.

De nombreuses voies peuvent apporter des solutions partielles pour répondre à ces nombreuses attentes, Parmi elles, on peut citer :
- pour le consommateur, par exemple :
   * les productions biologiques... mais elles ne sont pas suffisamment accessibles en prix pour contenter le plus grand monde de consommateurs.
- pour les éleveurs, par exemple :
   * les fourrages de graminées ou de légumineuses en remplacement de l'ensilage de maïs, mais ce ne pourra être une substitution que partielle dans nombre d'exploitations laitières.
   * les coproduits comme les drèches ou les tourteaux apportent également un complément d'apport de protéine, mais ils sont à limiter pour rester performants ;
   * les acides aminés de synthèse représentent une autre forme de contribution et de stratégie, mais ne répondent qu'aux préoccupations primaires des éleveurs, et en rien à celles des cultivateurs et des consommateurs.
- pour les cultivateurs, par exemple :
   * certaines régions bénéficient d'autres têtes d'assolement que les céréales et les oléagineux, comme la betterave, la pomme de terre, le lin textile... mais elles sont très insuffisantes pour satisfaire la sole française.

Ces exemples montrent que chaque maillon, de façon séparée, peut apporter quelques solutions mais elles restent partielles par rapport aux nombreuses attentes citées plus haut, et surtout non intégrées à leur amont et leur aval, ce qui ne permet pas d'apporter de la valeur ajoutée aux produits de nos agriculteurs et de nos éleveurs, notamment en faisant reconnaître des bénéfices consommateurs et citoyens.

Néanmoins, une solution intégrée semble disposer d'un potentiel d'intérêt important pour "contenter" nos champs, nos auges et nos assiettes.

En effet, les protéagineux ou légumineuses à graines, pourraient constituer une stratégie intéressante de diversification des cultures (cultivés seuls ou en association avec des céréales annuelles), tout en répondant à la demande d'autonomie protéique des élevages et des territoires.

L'intégration des légumineuses dans les rotations des cultures est intéressante d'un point de vue agronomique, tant en système conventionnel que biologique, et contribue à la baisse du réchauffement climatique (Magrini et al., 2016, Schneider et al., 2017).

En effet, elles sont capables de fixer l'azote atmosphérique dans le sol grâce aux bactéries contenues dans les nodosités de leurs racines, limitant le recours aux fertilisants azotés qui sont responsables de la moitié des émissions de gaz à effet de serre provenant de l'agriculture.

D'autre part, les légumineuses présentent également un intérêt agronomique et économique par l'amélioration des performances végétales et la réduction des charges d'intrants (Magrini et al., 2016, Schneider et al., 2017). L'insertion des légumineuses favorise le rendement des céréales suivantes. Ainsi en retenant uniquement les effets « rendement » et « réduction de la fertilisation azotée », le gain de marge brute d'un blé après avoir cultivé des protéagineux (dit blé de protéagineux) est de l'ordre de +160 €/ha par rapport à un blé de blé (c'est à dire une culture de blé qui suit une précédente culture de blé) (Terres Univia, 2016, Magrini et *al*., 2016).

Les graines protéagineuses constituent une source importante de protéines et d'énergie, sous forme d'amidon en ce qui concerne le pois et la féverole. De plus, ces protéines sont riches en acides aminés comme la lysine comparativement à celles des céréales, ce qui renforce leur intérêt pour équilibrer les rations des animaux.

Les valeurs nutritionnelles des graines protéagineuses de pois, de féverole et de lupin sont présentées dans le tableau ci-après.

| | POIS | FEVEROLE colorée | LUPIN blanc | LUPIN jaune | LUPIN bleu |
|---|---|---|---|---|---|
| Matière sèche (%) | 86,4 | 86,5 | 88,1 | 88,8 | 90,3 |
| Protéines brutes (%) | 20,7 | 25,4 | 33,4 | 37,5 | 30,3 |
| Matières grasses brutes (%) | 1,0 | 1,3 | 8,4 | 4,8 | 5,4 |
| Cellulose brute (%) | 5,2 | 7,9 | 12,0 | 14,7 | 14,2 |
| Cendres brutes (%) | 3,0 | 3,3 | 3,5 | 4,1 | 3,2 |
| Amidon (%) | 44,6 | 38,3 | 7,1 | 5,4 | 4,3 |
| Lysine (% MAT) | 7,3 | 6,5 | 4,9 | 4,8 | 5,0 |
| Méthionine (% MAT) | 1,0 | 0,7 | 0,8 | 0,7 | 0,9 |
| Calcium (g/kg) | 1,1 | 1,4 | 2,7 | 3,0 | 2,6 |
| Phosphore (g/kg) | 4,0 | 4,6 | 3,8 | 4,6 | 3,4 |
| Energie brute (kcal/kg) | 3770 | 3870 | 4460 | 4245 | 4380 |

| | | | | | |
|---|---|---|---|---|---|
| MAT = Matière Azotée Totale (Source : Table de composition et de valeur nutritive des matières premières destinées aux animaux d'élevage, INRA, 2002 ; Heuzé V., Thiollet H., Tran G., Lessire M., Lebas F., 2018. Yellow lupin (Lupinus luteus) seeds. Feedipedia, a programme by INRA, CIRAD, AFZ and FAO. https://www.feedipedia.org/node/23097 Last updated on May 17, 2018, 10:41)) | | | | | |

Néanmoins, si elles ont un potentiel nutritionnel intéressant, les graines protéagineuses restent sous-valorisées par les différentes espèces du fait de faibles digestibilités et de la présence de nombreux facteurs antinutritionnels.

Lorsque l'on s'intéresse au taux de valorisation de l'énergie de la protéine des différentes graines par les monogastriques et par les ruminants, on constate rapidement qu'il existe un important potentiel nutritionnel non exploité, de l'ordre de 40-50% de l'énergie, et de 20% de la protéine (d'après INRA, 2002).

Ces graines protéagineuses comportent de nombreux facteurs antinutritionnels qui peuvent limiter leurs utilisations. Leur présence a pour conséquence des limites d'incorporation dans les aliments et des contre-performances techniques que l'on peut résumer à travers une difficulté réelle de compétitivité des graines protéagineuses vis-à-vis des autres sources de protéine, particulièrement chez les espèces monogastriques.

Les principaux facteurs antinutritionnels rapportés sont les suivants :

### Tanins :

Les tanins sont des composés phénoliques thermolabiles, situés dans les pellicules des graines et connus pour réduire la digestibilité des protéines par les monogastriques car ils se lient aux protéines avant leur digestion, en formant des complexes insolubles.

La teneur en tanin est liée à la couleur de la graine, voire des fleurs (Myer et al., 2001). L'incorporation de féveroles riches en tanins conduit à une digestibilité in vitro plus faible (Bond, 1976) et une digestibilité in vivo plus faible chez les volailles, tandis que les variétés exemptes de tanins ont des digestibilités plus élevées en protéines et en acides aminés (Gatel, 1994 ; Crépon et al., 2010). Les tanins réduisent la rétention de la fraction azotée de la ration chez le monogastrique avec, pour conséquence, une réduction de la vitesse de croissance et de l'efficacité alimentaire (Carré et Brillouet 1986 ; Garrido et al 1988), ainsi que du poids de l'œuf (Martin-Tanguy et al 1977).

Il existe des variétés de féveroles exemptes de tanins. Cependant, les performances agronomiques sont faibles et rendent aujourd'hui leur mise en production caduque.

La teneur en tanins des graines de féverole est très variable, avec une valeur moyenne égale à 0,49 g/100 g de matière sèche pour un maximum égal à 1,70.

Concernant la graine de pois, les tanins en sont soit absents, soit présents à des teneurs moyennes égales à 3,9 g/100 g de matière sèche.

### Vicine et convicine :

Les cotylédons, ou amandes, des graines de féverole contiennent de la vicine et de la convicine. Ce sont des glycosides thermostables (Muduli et al 1982) qui sont responsables du favisme chez des populations humaines souffrant de déficit en glucose-6-phosphate déshydrogénase.

Il n'a pas été démontré que la vicine et la convicine ont une incidence sur la digestibilité de la fève chez les porcs, mais on a signalé qu'ils étaient responsables d'une diminution du poids des oeufs chez les poules pondeuses (Lesser et al., 2005 et Gatta et al., 2013) et de l'intensité de ponte (Muduuli et al 1981). Assez tôt, des études ont établi que la vicine et la convicine réduisaient la production d'oeufs chez les poules pondeuses (Guillaume et al., 1977, Fru-Nji et al, 2007, Olaboro et al., 1981).

Il existe des variétés exemptes de vicine et convicine. Elles ont l'avantage, contrairement à celles qui n'ont plus de tanins, d'obtenir des performances agronomiques tout à fait satisfaisantes (Duc et al., 1999).

Les teneurs rencontrées dans les graines de féverole sont variables de 0,02 à 1,49 g/100g (Khamassi et al. 2013).

### Facteurs antitrypsiques :

Les inhibiteurs trypsiques et chymotrypsiques sont des inhibiteurs de protéases (et d'amylases) qui se lient à la trypsine dans l'intestin grêle, empêchant la digestion des protéines. Leur ingestion s'accompagne chez le rat, le porc et, dans une moindre mesure, chez le poulet, d'une perte accrue de protéines endogènes, sous forme d'un complexe inhibiteur-enzyme, riche en acides aminés soufrés, qui est excrété (Liener 1979). Ce phénomène accentue la carence des graines de légumineuses en ces acides aminés et la croissance de l'animal est alors ralentie. La baisse de la concentration d'enzyme dans l'intestin grêle conduit en même temps à une hyperactivité et à une hypertrophie du pancréas. Ces molécules, de nature protéique, sont relativement thermolabiles.

Pour le pois, les inhibiteurs de la trypsine sont le principal facteur antinutritionnel, avec un peu moins de 2% de la teneur en protéines (le soja brut contient 8 fois cette quantité). Il existe de grandes différences variétales dans les facteurs antitryptiques. L'activité inhibitrice de la trypsine de 33 variétés européennes de pois de printemps variait de 1,69 à 7,56 unités inhibitrices de la trypsine (TIU), tandis que celle des pois d'hiver était de 7,34-11,24 TIU (Leterme et al., 1998). Pour la féverole, la teneur en inhibiteurs de la trypsine est plus faible et a pour valeur moyenne 2,9 TIU (0,88 à 6,25).

### Lectines :

Ce groupe de composés, répandu dans le règne végétal, est très polymorphe. Ce sont des glycoprotéines thermosensibles, dont la caractéristique commune est leur affinité pour les sucres, expliquant leurs propriétés d'agglutination des hématies du sang in vitro (les lectines se combinent aux résidus glycosyl présents sur les parois des globules rouges), à des degrés variables selon la lectine et l'espèce animale considérée (Liener 1986). Ils agissent dans l'intestin grêle en interférant dans l'absorption des produits finaux de la digestion par liaison et rupture des cellules épithéliales (Dixon et al., 1992). Leur ingestion se traduit par des retards de croissance, mal expliqués à ce jour.

Ils représentent environ 2,5% de la protéine de pois (Perrot, 1995) et de 2,0 à 13,0 % de la protéine de féverole.

### Alcaloïdes :

Les variétés antérieures de lupins étaient considérées comme amères. Elles contenaient un alcaloïde toxique (lupanine) et n'étaient pas recommandées pour l'alimentation animale, sans traitement préalable. Ainsi, il est acquis que des niveaux élevés de certaines variétés de lupins contenant ces alcaloïdes peuvent causer des effets indésirables se manifestant par une baisse des performances de croissance ainsi que de la consommation d'aliment.

Cependant, avec les progrès de la génétique, des variétés douces (à faible teneur en alcaloïdes), sont obtenues et ne posent désormais plus de problèmes d'appétences.

### Oligosaccharides :

Ce sont de petits polymères de nature glucidique et thermostables. Les animaux de rente et domestiques ne possèdent pas d'alpha-galactosidase, enzyme nécessaire à l'hydrolyse de la liaison entre le galactose et le glucose ainsi qu'entre deux molécules de galactose. Ces molécules ne traversent pas la paroi intestinale et se retrouvent donc intactes au niveau du colon où elles sont métabolisées par les microorganismes présents causant une dégradation des performances de croissance liée à une baisse de l'ingéré. La fermentation qui en résulte se traduit par une gêne au niveau digestif (flatulences, diarrhées) susceptible de ralentir l'ingestion d'aliment (Diaz et *al*., 2006, Kaysi et Melcion, 1992). Cette dégradation des croissances s'accentue lorsque l'incorporation de lupin augmente. Les résultats des expériences chez les porcs ont montré que les oligosaccharides ont affecté négativement la digestion apparente des protéines, des graisses et de certains minéraux. De plus, de grandes quantités d'oligosaccharides ont augmenté le poids vide de l'intestin grêle. Parce que les tissus d'organes comme le tractus intestinal sont métaboliquement très actifs, il faut plus d'énergie pour l'entretien du métabolisme de base de l'animal, ce qui laisse moins d'énergie pour la croissance.

Les graines de lupin blanc contiennent de 7 à 14% d'α-galactosides, dont le plus important est le stachyose (2,8%), suivi du saccharose (1,8%), du raffinose (0,4%) et du verbascose (0,3%) (Zduncryk et coll. 1996, Saini, 1989). Le niveau d'oligosaccharide peut dépendre de la variété mais aussi des conditions de culture et de récolte (Pisarikova et al., 2009). Il existe une relation entre la teneur en stachyose et verbascose et les phénomènes de flatulence, le raffinose semblant avoir moins d'effet. Les graines de féverole et de pois en sont également pourvues bien que à un degré moindre, ainsi que le montre le tableau ci-dessous.

| g/100g MS | Stachiose | Raffinose | Verbascose |
|---|---|---|---|
| Lupin | 2,8 - 5,3 | 0,4 - 1,1 | 1,4 - 2,0 |
| Pois | 2,3 - 2,6 | 0,5 - 0,6 | 2,2 - 3,4 |
| Féverole | 0,8 - 1,6 | 0,1 - 0,4 | 2,5 - 3,4 |

Opazo et al., 2012; Ezierny et al., 2010

### Acide phytique :

L'acide phytique est la principale forme de stockage du phosphore dans de nombreux tissus végétaux. Le phosphore sous cette forme n'est pas disponible pour les non-ruminants, en raison du manque d'enzyme phytase qui sépare le phosphore des molécules de phytate.

L'acide phytique est un chélatant important de minéraux tels que le calcium, le magnésium, le fer et le zinc, et peuvent donc contribuer à des carences en minéraux. Dans une moindre mesure, il se lie aussi aux protéines et à l'amidon ce qui entraîne une diminution de la disponibilité de ces nutriments dans le tube digestif.

La concentration en acide phytique de la féverole est de l'ordre de 0,2 à 0,7% sur poids sec.

L'usage des phytases incorporées dans l'alimentation des monogastriques est aujourd'hui répandu, et représente la principale voie de maîtrise de ce facteur antinutritionnel.

### Les fibres :

Les monogastriques en général ont des capacités digestives limitées des fibres. Les graines protéagineuses en sont relativement pourvues : 5,2%, 7,9% et 11,4% de cellulose brute, respectivement dans les graines de pois, de féverole et de lupin blanc. Ces fibres représentent donc également une catégorie de facteurs antinutritionnels qu'il importe de souligner, notamment chez les jeunes monogastriques de rente tels que les poulets, les porcelets ou encore les poissons, mais aussi pour les jeunes animaux domestiques tels que le chien et le chat.

Ces fibres ont non seulement une faible digestibilité, mais procurent également une moindre digestibilité des protéines et des autres nutriments, étant donné qu'elles vont jouer un rôle de « rempart » vis-à-vis des enzymes digestives des animaux en limitant leur accessibilité ; et un rôle d'encombrement dans l'intestin limitant l'assimilation des nutriments.

En synthèse, il apparaît de ce qui précède, qu'une somme de facteurs antinutritionnels présents dans les graines de protéagineuses est à prendre en compte si l'on veut tendre vers une utilisation moins limitée de ces graines dans les rations pour monogastriques et vers une amélioration de leur valorisation nutritionnelle et métabolique.

### PROBLEME TECHNIQUE A RESOUDRE

Les limites à l'usage des graines protéagineuses en nutrition animale sont nombreuses et liées à des barrières techniques et économiques.

Sous l'angle technique, l'enjeu est de réduire l'effet des facteurs antinutritionnels et d'améliorer les valeurs de digestibilité en énergie et en protéine des graines.

Et d'un point de vue économique, aucune mise en oeuvre technique n'a aujourd'hui réussit à relever le défi d'être économiquement viable, au regard des seuls usages extrêmement peu développés de graines protéagineuses chez les monogastriques, en système conventionnel comme en système biologique.

Parmi les leviers à l'amélioration nutritionnelle des graines protéagineuses, deux voies principales sont mobilisables : la sélection végétale et les procédés technologies de traitements des graines.

Ainsi, en matière de sélection variétale, quelques facteurs antinutritionnels ont déjà été ciblés par la sélection variétale, et pour certains d'entre eux avec succès, c'est-à-dire avec un déploiement de ces variétés auprès des agriculteurs : c'est le cas notamment des tanins du pois, des vicines et convicines de la féverole, et des alcaloïdes du lupin.

Mais pour de nombreux facteurs antinutritionnels de ces espèces végétales, le levier génétique n'a pas fait ses preuves sur le terrain. De plus, les variétés pauvres en certains facteurs antinutritionnels sont des variétés à faible rendement.

En parallèle du travail de sélection variétale sur les facteurs antinutritionnels, de nombreux procédés technologiques ont été testés pour réduire ou éliminer les facteurs antinutritionnels, et/ou améliorer les valeurs nutritionnelles et de digestibilité des graines.

Les différents procédés jusqu'alors testés ont trait à des approches mécaniques, ou thermiques, ou thermomécaniques, ou enzymatiques.

Il faut retenir que la bibliographie sur les procédés technologiques de traitement des graines protéagineuses est très hétérogène, partielle, peu informative et le plus souvent ancienne.

Nombre de travaux publiés ont cherché à comparer une technologie a un témoin non traité, ou bien des technologies en comparaison deux à deux. Ou encore en s'appuyant sur des techniques d'évaluation in vitro souvent différentes, et/ou des études in vivo en conditions variables.

En effet, les résultats partiels issus de la bibliographie sont anciens et n'ont pas intégré l'évolution des technologies depuis 30 ans ; et ils présentent uniquement des comparaisons entre technologies, sans vraiment envisager l'optimisation desdites technologies ou mieux encore des combinaisons de technologies.

C'est pourquoi, la bibliographie actuelle ne permet absolument pas de tirer des conclusions claires sur les technologies et les paramètres correspondants à utiliser, notamment dans le but d'une mise en oeuvre industrielle.

D'autre part, les études in vivo, plutôt anciennes en général, ont pour beaucoup été réalisées sur des animaux de génétique moins productive et des aliments moins adaptés à des systèmes alimentaires actuels.

En effet, la sélection génétique animale dont l'indice de consommation alimentaire progresse en moyenne de 2,5% par an, est réalisée pour une production mondiale, avec des aliments à base de maïs et de soja, classiquement utilisés (Schmidt et al, 2009 ; Zuidhof et al, 2014).

Ceci ne permet pas une valorisation optimale des matières premières plus diversifiées en source d'énergie et de protéines, telles que les graines protéagineuses.

C'est pourquoi les effets des FAN (Facteurs Antinutritionnels), des variétés végétales et des technologies peuvent probablement s'amplifier à partir des modèles animaux d'évaluation in vivo actuels. Parce que dans ce contexte, il devient de plus en plus difficile de rendre performantes les graines protéagineuses actuelles.

C'est en ce sens que, bien que de nombreux traitements technologiques ont été testés par le passé, ils méritent pour certains d'entre eux d'être réétudiés dans les contextes techniques et économiques actuelles.

Les principaux traitements jusqu'alors testés sur lesdites graines protéagineuses sont les suivants :

### Traitements mécaniques :

Les traitements mécaniques « classiques », broyage, micronisation, détruisent la structure initiale des graines en rompant les parois cellulaires et les granules d'amidon. Ces traitements permettent la division en particules plus petites par broyage grossier, (particules de 5 mm) ou broyage fin (grille de 2-3 mm), c'est-à-dire par écrasement, éclatement (broyeur à marteau) ou cisaillement (broyeur à couteaux ou cylindre).

La taille des particules obtenues et leur endommagement déterminent le degré d'exposition des constituants biochimiques aux agents digestifs (microbes du rumen ou enzymes intestinales) et donc la vitesse de leur digestion. La structure tissulaire est conservée en grande partie. Néanmoins, le broyage à la grille de 3 mm, voire 1 mm, suivi d'une agglomération détruit la structure des tissus.

Alors que la digestibilité peut être, notamment dans le cas de la micronisation, améliorée en permettant une hausse de la digestibilité de l'amidon (chez le porc et la volaille) et de la protéine (uniquement chez le porc, pas d'effet sur la volaille), l'impact est nul sur les facteurs antinutritionnels.

Le décorticage/dépelliculage de la graine permet d'éliminer les coques ou les pellicules des graines qui contiennent exclusivement de la cellulose, des fibres, certains facteurs antinutritionnels et contaminants.

Le décorticage est une séparation mécanique du grain et de la coque, utilisée le plus souvent sur les graines de pois, de féverole et de soja. L'objectif est de diminuer le taux de cellulose afin d'enrichir la matière première, et d'améliorer la valorisation des graines par l'élimination de certains FAN présents dans la coque comme les tanins.

Le dépelliculage consiste à enlever la pellicule (fine membrane) présente autour du grain et présente les mêmes avantages que le décorticage.

Ces deux procédés permettent de concentrer certains nutriments comme les protéines et la matière grasse et de se séparer d'une partie, seulement, des FAN contenus dans ces pellicules.

### Traitements thermiques :

Au sein des traitements thermiques, on recense la granulation, le toastage, le floconnage et l'autoclavage : l'action de la chaleur se conjugue à celle d'une hydratation externe sous forme d'eau ou de vapeur à pression réduite (cuisson humide et longue à température modérée). On distingue un effet supérieur du toastage et de l'autoclavage par rapport au floconnage et à la granulation.

Ces procédés ont des effets positifs plus ou moins importants sur la valeur énergétique notamment, mais ne sont pour autant pas répandus en nutrition animale, faute de rentabilité.

Pour ce qui est de la torréfaction et du "Jet-sploding", cuisson sèche et courte à température très élevée avec la chaleur transmise par conduction, par convection et rayonnement, aucune preuve d'efficacité n'a été démontrée jusqu'à présent. En effet, ce procédé ne modifie quasiment pas la granulométrie et donc l'intégrité des tissus de la graine.

### Traitements thermomécaniques :

La cuisson-extrusion est une opération complexe qui équivaut à plusieurs opérations unitaires : malaxage, cuisson et mise en forme. Chacune de ces opérations peut être modulée, en fonction de la matière à transformer et du produit à obtenir, par le choix approprié des paramètres de commande de la machine.

Entraînée par des vis, la matière est soumise pendant un temps très court (20 à 60 s) à de hautes températures (100 à 200°C), à de fortes pressions (50 à 150 bars), et à un cisaillement plus ou moins intense. Sous l'action de ces paramètres physiques, la matière subit des modifications physico-chimiques et une homogénéisation. Sa sortie à travers la filière lui donne sa forme finale. La chute brutale de la pression lors de l'extrusion déclenche une vaporisation instantanée de l'eau présente, qui peut entraîner une expansion caractéristique du produit.

Les premiers cuiseurs-extrudeurs étaient mono-vis. Les matériels de seconde génération sont des appareils bi-vis (comportant deux vis parallèles, tangentes ou copénétrantes, tournant dans le même sens ou en sens inverse) ; ils sont plus souples d'emploi et permettent en particulier de travailler avec une plus grande régularité.

Ce procédé de cuisson-extrusion permet la destruction d'une partie des FAN et améliore la digestibilité des graines mais les résultats restent variables et pas toujours reproductibles, si les nombreux paramètres en jeu ne sont pas contrôlés (type de machine (mono-vis / bi-vis), contraintes mécaniques (type de vis, écluse, vitesse, filière...), contraintes thermiques (eau, vapeur, durée...), contraintes de présentation (filière pour farines, croquettes...)).

Les procédés thermomécaniques sont cependant méconnus pour la plupart des protéagineux et restent à développer.

### Traitements enzymatiques :

Tous les animaux secrètent des enzymes pour digérer les aliments. Cependant, le processus digestif de l'animal n'est pas efficace à 100 %. Par exemple les porcs et les volailles ne digèrent pas 15 à 25% des aliments qu'ils ingèrent. L'apport d'enzymes exogènes dans l'alimentation des animaux, et plus particulièrement des monogastriques, permet d'améliorer la digestibilité des amidons, protéines, fibres et minéraux. Cet apport enzymatique permet de meilleures performances de croissance ainsi qu'une baisse des rejets dans l'environnement.

La supplémentation enzymatique est réalisée à partir d'une enzyme commerciale isolée, sélectionnée sur quelques activités enzymatiques. Des essais ont montré l'intérêt de cette technique comme voie d'amélioration de la valeur nutritionnelle des protéagineux, mais elle ne s'est pas révélée comme viable économiquement.

### Traitements technologiques et gélatinisation de l'amidon, dénaturation des protéines et disponibilité de la matière grasse :

La température, la pression et l'humidité ont des effets sur les composantes des aliments. Dans de nombreux processus, la température est l'un des facteurs qui perturbe davantage la structure de l'amidon (Pan et al., 2017; Wang et al., 2016a; Zhang et al., 2014). Mais lorsque la température de chauffage est fixe, la teneur en eau ou la pression joue un rôle tout aussi important dans la perturbation des structures et dans l'augmentation de la digestibilité de l'amidon (Wang et al. 2017b). Il est cependant important de considérer l'ensemble de ces paramètres car les mêmes effets tels que la dénaturation des protéines, gélatinisation des amidons et leurs interactions peuvent être atteint par des combinaisons différentes de ces paramètres. Par exemple, à l'extrême, la gélatinisation peut être obtenue à température ambiante par traitement sous pression hydrostatique. À température et durée de traitement constantes, le degré de gélatinisation augmente avec la pression. Plus la température est élevée, plus la pression de gélatinisation complète est basse. À température et pression constantes, le degré de gélatinisation augmente avec la durée du traitement.

Un bon exemple est la gélatinisation de l'amidon qui correspond au passage de la matrice de l'état solide ou granulaire à l'état vitreux puis à l'état liquide (Cuq et al., 2003). Les passages aux différents états dépendent de paramètres technologiques tels que, la pression, la température, la durée et la teneur en eau. La température de transition solide-vitreux peut être différente suivant les conditions d'humidité et de pression. A ce niveau, la matrice passe d'un état solide à un état caoutchouteux mobile (Keetels, 1995 ; Behnke, 2001). De même la température de fusion, passant de l'état vitreux à l'état liquide, dépend aussi des conditions d'humidité et de pression. A cette température la matrice devient liquide (Keetels, 1995). L'ampleur de la transformation dépend surtout de la durée et de la vitesse de chauffage (Mariotti et al., 2005; Wang & Copeland, 2013). La durée du maintien de ces paramètres technologiques permet d'aboutir à une transformation totale de la matrice. A noter que, la gélatinisation a lieu dans les parties de la matrice où la teneur en eau est suffisamment élevée (Hoseney, 1994).

Les paramètres technologiques appliqués pendant le traitement induiront des modifications physico-chimiques comme la gélatinisation de l'amidon ou la dénaturation de la protéine. Enfin, les nutriments peuvent interagir entre eux mettant en jeux des modifications complexes comme les réactions de Maillard (Svihus, 2006) ou bien se polymériser l'un avec l'autre pour former une structure nouvelle (Svihus et al., 2005).

La gélatinisation de l'amidon et la dénaturation des protéines modifie les structures et donc les propriétés des matrices. La viscosité est donc différente entre une matrice native et une matrice traitée. Ces modifications influencent positivement la digestibilité des nutriments par l'animal (Champ et Colonna, 1993). Les recherches sur la gélatinisation de l'amidon sous pression ont montré une meilleure digestibilité enzymatique de l'amidon traité (Hayashi et Hayashida, 1989).

La disponibilité de la matière grasse (MGD) lorsqu'est utilisé des graines à base de lipide est un paramètre essentiel à maîtriser pour sa valorisation à destination de l'animal, et ce d'autant plus qu'elles en sont riches. Les processus technologiques de traitement des graines, faisant appel à des forces mécaniques et thermiques, favorisent la rupture des parois cellulaires et membranes plasmatiques conduisant à une plus forte libération de la matière grasse contenue dans les vacuoles lipides. Ainsi, l'usage de traitements technologiques adaptés permet de maximiser cette libération de la matière grasse. L'intérêt de cette dernière pour l'animal est lié à l'amélioration de la digestibilité des lipides (Noblet et al., 2008), et à l'efficacité de dépôt des acides gras alimentaires chez le porc (Chesneau et al., 2009), ainsi qu'à la biohydrogénation in vitro des acides gras chez la vache laitière (Enjalbert et al., 2008).

### Traitements appliqués par les acteurs économiques des filières d'élevage :

Le constat, dans les filières d'élevages d'aujourd'hui, repose sur le fait que :
1- les variétés produites n'ont pas de caractéristiques propres en termes de compositions nutritionnelles, sinon des caractéristiques agronomiques ;
2- les procédés technologiques d'usage des graines en élevage sont basiques puisqu'ils font appel aux seuls traitements mécaniques de broyage, voire de dépelliculage pour les salmonidés, aux seuls traitements thermiques de granulation et de toastage, et aux rares traitements thermomécaniques de cuisson-extrusion.

En effet, les seuls usages actuellement présents sont basiques et de ce fait, extrêmement peu développés, expliqué par un manque de viabilité technique et économique.

En synthèse, certaines des limites techniques à l'utilisation des protéagineux en alimentation peuvent être levées par la voie de la génétique, c'est l'exemple de certains facteurs antinutritionnels tels que les facteurs antitrypsiques, les tanins, la vicine et la convicine notamment.

D'autres peuvent l'être par la voie des procédés de transformation tels que le dépelliculage qui permet de se défaire des tanins contenus dans les pellicules, ou des procédés thermiques parvenant dans certaines conditions à venir à bout de certains facteurs antinutritionnels thermosensibles.

Enfin, des procédés mécaniques comme le broyage participent à l'amélioration de la valeur nutritionnelle des graines, tout comme des procédés thermiques tel le toastage et la granulation, ou des procédés thermomécaniques tels que la cuisson extrusion, ou bien encore des procédés enzymatiques tels que l'addition d'enzymes.

Séparément donc, chacune de ces voies de sélections génétiques ou de procédés technologiques rapportées dans la bibliographie proposent des axes d'amélioration bien connus sur la limitation ou l'élimination des facteurs antinutritionnels d'une part et/ou sur l'amélioration des valeurs de digestibilité / dégradabilité des graines d'autre part, mais aucune d'entre elles ne se suffit pour être techniquement complète et économiquement intéressante, en termes de valorisations technico-économiques, comme en témoigne l'inexistence de pratiques généralisées sur le terrain.

Dans un marché historique où le choix des sources de protéines végétales présentes dans les régimes alimentaires des animaux repose sur des critères essentiellement économiques, la place des graines protéagineuses au regard des limites existantes a été réduite à néant, au profit surtout du tourteau de soja, et secondairement des tourteaux de colza et de tournesol, voire même des acides aminés de synthèse.

Dans un marché nouveau où la tendance n'est pas uniquement de produire des viandes ou des oeufs à un prix compétitif, mais aussi de répondre à des attentes de consommateurs enclin à plus de traçabilité des produits et de proximité, l'enjeu devient certes d'avoir des sources de protéines compétitives mais aussi des sources de protéines tracées et produites localement.

Les cultures de lupin, de féverole et de pois ont ainsi à leur actif de nombreux avantages agronomiques et environnementaux, leur conférant des services écosystémiques bien connus et une reconnaissance d'intérêts par les producteurs et par les consommateurs.

Pour réussir à réintroduire durablement les protéagineux dans les sols et dans les auges, il y a des éléments de contexte favorables : des incitations « politiques » (plan d'aide aux cultures protéagineuses, plan "Ecophyto", aides à l'innovation...), des atouts agronomiques (rendement des céréales suivantes, moins d'usages d'intrants...), des réponses potentielles à de nombreuses attentes agricoles (autonomie protéique, pérennité économique...) et sociétales (local, non OGM, sans soja, biodiversité, environnement...).

Mais cet environnement propice ne suffit pourtant pas à renforcer l'usage des oléo-protéagineux métropolitains si nos systèmes de production des végétaux et des animaux ne sont pas techniquement robustes et économiquement viables. Il doit pour cela être accompagné de la mise au point de technologies nouvelles et efficientes au niveau technique et économique pour être apporteur des meilleures solutions aux filières agricoles et d'élevage.

Preuve en est à travers les seuls traitements technologiques appliqués actuellement par les acteurs économiques des filières d'élevage. Le constat, dans les filières d'élevages d'aujourd'hui, repose sur l'usage non optimal de traitements technologiques. Comme il a déjà été précisé précédemment, les procédés technologiques d'usage des graines en élevage font appel aux seuls traitements mécaniques de broyage, voire de dépelliculage pour les salmonidés, aux seuls traitements thermiques de granulation et de toastage, et aux rares traitements thermomécaniques de cuisson-extrusion.

En effet, les seuls usages actuellement présents en alimentation des monogastriques sont basiques et de ce fait extrêmement peu développés, expliqués par un manque de viabilité technique et économique. Et par ailleurs, ils ne sont pas rendus complémentaires du levier génétique.

Il existe donc à l'heure actuelle un besoin non résolu de fournir un procédé de traitement des protéagineux qui permette de s'affranchir des nombreux inconvénients détaillés plus haut, grâce à une combinaison de différents leviers, associés de telle sorte qu'ils génèrent un effet synergique.

Par ailleurs, au-delà de l'évaluation de ces procédés sur la valorisation par les animaux, il est intéressant de s'appuyer sur des méthodes d'évaluation de la qualité d'un traitement technologique au regard de leur intérêt pour les animaux.

C'est en ce sens qu'ont été retenues plusieurs méthodes de qualification des procédés relatifs aux principales composantes nutritionnelles que constituent l'amidon, la protéine et la matière grasse, et que nous présentons ci-dessous :

### Méthode d'évaluation du taux de gélatinisation de l'amidon ou de l'endommagement de l'amidon

Les amidons changent de structure, passant d'une structure naturelle à une structure gélatinisée, puis à une nouvelle structure au cours des transformations fonction de la température, la pression, l'humidité et la durée du traitement. Bien que la structure gélatinisée soit attaquée par l'amylase, la nouvelle structure ainsi que la structure naturelle sont résistantes à l'action de l'amylase.

Le taux de gélatinisation de l'amidon des graines protéagineuses a été déterminé selon la méthodologie décrite par Chiang et Johnson (1977). Cette méthode est basée sur l'augmentation de la susceptibilité enzymatique, c'est-à-dire que les grains d'amidon gélatinisés sont plus facilement hydrolysés que les grains d'amidon natifs. Brièvement, l'amidon total est hydrolysé avec de l'amyloglucosidase, dans des conditions spécifiques, afin que seul l'amidon gélatinisé ne le soit. Pour en déterminer sa proportion, l'amidon total est déterminé selon la méthode enzymatique normée (AFNOR 2005) pour servir de valeur de base.

### Méthode d'évaluation de la solubilisation de la protéine

Les traitements technologiques appliqués aux graines protéagineuses sont susceptibles dans certaines conditions de dénaturer les protéines. Cette dénaturation se manifeste par l'établissement de nouvelles liaisons entre les chaînes polypeptidiques (réticulation), ce qui conduit à leur agrégation et à leur insolubilisation. Les liaisons formées, impliquant généralement les résidus lysine et acide glutamique, sont résistantes à l'hydrolyse enzymatique. Cette insolubilisation, ou moindre solubilisation de la protéine se révèle intéressante dans le domaine de l'alimentation animale. A titre d'exemple, elle diminue l'allergènicité en détruisant certains épitopes (Toullec et al 1992) ; et limite chez les ruminants la dégradation ruminale des protéines (Benchaar et al 1992).

La détermination de la solubilité des protéines est évaluée par une solubilisation de ces dernières dans des tampons à différents pH : acide, natif, basique. Après dosage des teneurs en protéines (méthode Kjeldahl) de la matière première et des protéines en solution dans les différents tampons, un bilan de matière est établi afin de déterminer la fraction solubilisée.

### Méthode de disponibilité de la matière grasse

Cette méthode interne repose sur l'évaluation de la proportion de la matière grasse extraite dans un solvant au bout d'une durée prédéterminée. Ce dosage a pour objectif de mimer la libération, progressive et par étape, de la matière grasse dans les différents compartiments du tube digestif des animaux.

Brièvement, le dosage s'effectue en quatre étapes :
- Préparation de la matière première : elle consiste en un broyage grossier afin d'obtenir une granulométrie hétérogène à l'image des broyages réalisés en industrie de l'alimentation animale ;
- Extraction de la matière grasse : Elle consiste en la mise au contact de la matière première préalablement pesée avec un solvant d'extraction (ex : éther de pétrole) sous une agitation contrôlée pendant une durée prédéterminée, en l'occurrence de 10 minutes. Il est également possible de conduire cette phase d'extraction pendant des durées différentes, permettant ainsi de délivrer une cinétique de libération de la matière grasse.
- Séparation solide/liquide par filtration : Elle consiste en la filtration du broyat mis en solution dans le solvant afin de ne récupérer que la phase liquide dans un ballon sec et préalablement taré.
- Elimination du solvant de l'extrait et pesé du résidu sec : Elle consiste en une évaporation du solvant ayant solubilisé la matière grasse. Une fois évaporé, séché et refroidit, le ballon sera pesé. Ce cycle est répété jusqu'à l'obtention d'une masse constante.

C'est ainsi qu'il est envisageable de caractériser les graines à travers la MGD, dont les valeurs sont dépendantes des conditions opératoires fixées.

Cette matière grasse libérée, dite disponible car rapidement accessible, sera absorbée au travers de la paroi intestinale. Ainsi absorbée, elle pourra être valorisée par l'animal pour son propre métabolisme.

De manière complémentaire et astucieuse, nous avons également retenu des méthodes directes et indirectes de complexation de la protéine et des glucides.

### Méthode d'évaluation de la dégradabilité de la protéine (DE1)

La dégradabilité enzymatique de la protéine (DE1) des graines protéagineuses a été mesurée selon Aufrère et al. (1989, 1991). Brièvement, l'échantillon subit une hydrolyse par une protéase dans un tampon borate-phosphate à pH 8 à 40°C pendant une heure. Le dosage de l'azote dégradé est effectué sur le surnageant et rapporté à la quantité totale d'azote de l'échantillon.

### Méthode d'évaluation de la N-ε-carboxyméthyllysine (CML) et de la lysine totale

Les teneurs en CML et lysine ont été déterminée selon la méthode de Niquet-Léridon et Tessier (2011). En résumé, chaque échantillon est réduit puis hydrolysé en milieu acide avant d'être analysé par chromatographie liquide à haute performance (HPLC) couplée à une détection par spectrométrie de masse en tandem (MS/MS). Les éventuels effets de la matrice sont corrigés à l'aide de l'ajout d'un standard interne, isotope stable de la CML (CML-D²) et de la lysine (Lysine-¹⁵N₂).

De plus, un chauffage des protéines en présence de sucres réducteurs (fructose, lactose...) conduit à la formation de nombreux polymères complexes, impliquant notamment la lysine. Cette réaction, appelée brunissement non enzymatique ou réaction de Maillard, contribue aussi à diminuer la digestibilité des protéines.

### Méthode d'évaluation de l'acrylamide

L'acrylamide est le nom usuel du 2-propénamide (amide acrylique) de formule brute C3H5NO. L'acrylamide peut se forme notamment lors de la cuisson à haute température de matières premières riches en hydrate de carbone (amidon, sucres) et en protéine qui entrent en réaction avec l'asparagine (réaction de Maillard). La formation de l'acrylamide semble fortement influencée par la température de cuisson, la teneur en eau des aliments, ainsi que le « brunissage » ou « carbonisation » des produits. L'acrylamide se forme lors de la cuisson à des températures égales ou supérieures à 120 °C.

Brièvement, l'acrylamide de l'échantillon est extrait dans de l'eau par agitation puis, après centrifugation et récupération du surnageant, est purifié sur cartouche SPE pour être ensuite quantifié par UPLC-MS/MS en mode MRM.

Un état de la technique dans le domaine de l'invention est constitué par les documents suivants :
JEZIERNY D ET AL : "The use of grain legumes as a protein source in pig nutrition: A review", ANIMAL FEED SCIENCE AND TECHNOLOGY, vol. 157, no. 3-4, 11 mai 2010, pages 111-128, XP027006418, ISSN: 0377-8401 (D1) ;
PATRICIO SAEZ ET AL: "Effects of dehulling, steam-cooking and microwave-irradiation on digestive value of white lupin (Lupinus albus) seed meal for rainbow trout (Oncorhynchus mykiss) and Atlantic salmon (Salmo salar)", ARCHIVES OF ANIMAL NUTRITION, vol. 69, no. 2, 4 mars 2015 (D2) ;
FR 3 040 588 A1 (D3) ;
FRANCESCO MASOERO ET AL: "Effect of extrusion, espansion and toasting on the nutritional value of peas, faba beans and lupins", ITALIAN JOURNAL OF ANIMAL SCIENCE, vol. 4, no. 2, 1 janvier 2005 (D4).D1 s'apparente à un "catalogue" de traitements indépendants les uns des autres, applicables aux graines protéagineuses. Ce document évoque la possibilité de réduire le taux de facteur antinutritionnels par une technique de sélection ou par des techniques connues en soi telles que des traitements physiques,
D2 ne s'intéresse qu'au traitement d'une seule graine (lupinus albus) par décorticage, cuisson à la vapeur et traitement aux micro-ondes.
D3 se rapporte à un procédé de traitement de graines incluant une étape de germination des graines.
D4 a trait aux effets de l'extrusion, de l'expansion et de la torréfaction de la valeur nutritionnelle de certaines graines protéagineuses.

### RESUME DE L'INVENTION

Ainsi, la présente invention est relative à un procédé de traitement de graines protéagineuses en vue d'améliorer leur valorisation à titre d'aliments, notamment pour les animaux, ces graines étant choisies parmi l'une au moins des graines suivantes : féverole (Vicia fava L.), pois (Pisum sativum L.), lupin blanc (Lupinus albus L.), lupin bleu (Lupinus angustifolius L) et lupin jaune (Lupinus luteus L),
caractérisé par le fait qu'il comporte les étapes successives suivantes :
a) utilisation de graines d'au moins une des espèces végétales précitées, à la condition que ces graines présentent une teneur en protéine, et/ou une teneur en amidon, et/ou une teneur en matière grasse, de valeur supérieure ou égale à celle indiquée dans le tableau ci-dessous :

| | Teneur supérieure à | | |
|---|---|---|---|
| Composés Nutritionnels | Protéine (g/100g MS) | Amidon (g/100g MS) | Matière grasse (g/100g MS) |
| Féverole | 28 | 39 | |
| *Vicia fava L.* | | | |
| Pois | 22 | 45 | |
| *Pisum sativum L.* | | | |
| Lupin blanc | 35 | | 8 |
| *Lupinus albus L.* | | | |
| Lupin bleu | 31 | | 5.5 |
| *Lupinus angustifolius L.* | | | |
| Lupin jaune | 38 | | 5.0 |
| *Lupinus luteus L.* | | | |

Et, au moins un des composés du groupe suivant : facteur antinutritionnel (FAN), cellulose brute, fibres insolubles dans les détergents neutres (NDF), selon une teneur inférieure à celle indiquée dans le tableau ci-dessous :

| Espèces | FAN/Cellulose brute/NDF | Teneur inférieure à |
|---|---|---|
| | | (g/100g MS) |
| Féverole | Tanins | 0.3 |
| *Vicia fava L.* | Vicine, convicine | 0.5 |
| | Alpha-galactosides | 2.5 |
| | Cellulose Brute | 10 |
| | NDF | 18 |
| Pois | Tanins | 0.01 |
| *Pisum sativum L.* | Alpha-galactosides | 5 |
| | Cellulose Brute | 7.5 |
| | NDF | 18 |
| Lupin blanc | Alcaloïdes | 0.1 |
| *Lupinus albus L.* | Alpha-galactosides | 10 |
| | Cellulose Brute | 16 |
| | NDF | 25 |
| Lupin bleu | Alcaloïdes | 0.2 |
| *Lupinus angustifolius L.* | Alpha-galactosides | 9 |
| | Cellulose Brute | 18 |
| | NDF | 29 |
| Lupin jaune | Alcaloïdes | 0.3 |
| *Lupinus luteus L.* | Alpha -galactosides | 12 |
| | Cellulose Brute | 18 |
| | NDF | 29 |

b) Mise sous une pression minimale de 10 bars des graines de l'étape a), pendant une durée supérieure à 10 secondes, jusqu'à l'obtention d'une température supérieure à 80°C ;
et/ou b bis) chauffage des graines, pendant une durée minimum de 15 minutes, préférentiellement de 30 minutes à 2 heures, à une température supérieure à 80°C, préférentiellement de 90 et 150°C.

Selon d'autres caractéristiques non limitatives et avantageuses de l'invention :
- après la mise en oeuvre de ladite étape a), on procède à leur fractionnement ;
- après la mise en oeuvre de ladite étape a) et dès lors que l'on a affaire à des graines d'espèce différente et/ou de composition différente en protéine, en amidon, en matière grasse, en facteur antinutritionnel, en cellulose brute, ou en fibres insolubles dans les détergents neutres (NDF), on procède à leur mélange et à leur fractionnement, ou à leur fractionnement puis à leur mélange ;
- préalablement à l'étape b), on procède à une étape thermique de préparation des graines avec de la vapeur et/ou un liquide à base d'eau, jusqu'à obtention d'une température comprise entre 30 et 90°C et une humidité supérieure à 12%, préférentiellement 15%, pendant une durée supérieure à 2 minutes, préférentiellement 15 minutes ;
- l'étape thermique de préparation est réalisée en présence d'au moins une enzyme exogène identifiée parmi les familles suivantes : arabinofuranosidases, béta-glucanases, cellulases, glucoamylases, pectinases, pectine methyl estérases, phytases, protéases, xylanases et, préférentiellement, xylanases, beta-glucanases et pectinases, ladite enzyme exogène ayant été préalablement ajoutée aux graines ou au mélange ;
- à l'étape thermique de préparation en présence d'enzyme exogène, on se place à une humidité supérieure à 15%, préférentiellement 25%, et on fait durer la préparation pendant au moins 15 minutes, préférentiellement 60 minutes ;
- lors de la mise en oeuvre de ladite étape thermique de préparation, on procède à une agitation du mélange ;
- lorsque l'on procède à un mélange puis à un fractionnement, on procède à un nouveau mélange après ledit fractionnement ;
- l'on poursuit ledit fractionnement jusqu'à ce qu'au moins 90% desdites graines aient une granulométrie inférieure à 2000 micromètres, de préférence inférieure à 1500 micromètres ;
- ladite étape b bis) est mise en oeuvre sur ledit mélange;
- l'on interrompt la mise en oeuvre de l'étape b), respectivement b bis) dès lors que la teneur de l'un au moins des facteurs antinutritionnels du tableau ci-dessous a une valeur inférieure à celle également indiquée ci-dessous :

| Espèce | Nature des Facteurs Antinutritionnels | Teneur inférieure à |
|---|---|---|
| Féverole | Lectines | 0.10 |
| | (g/100 g de matière brute) | |
| *Vicia lava L.* | Facteurs antitrypsiques (UTI/mg de matière brute) | 1.50 |
| Pois | Lectines | 0.10 |
| | (g/100 g de matière brute) | |
| *Pisum sativum L.* | Facteurs antitrypsiques (UTI/mg de matière brute) | 1.50 |

- à la suite de l'étape a), on procède au décorticage et/ou au dépelliculage desdites graines ;
- après ladite étape a) ou après ladite étape de décorticage et/ou de dépelliculage, on procède à un fractionnement spécifique et une séparation desdites graines selon un critère choisi parmi la taille, le poids, la forme, la densité, un paramètre aérodynamique, colorimétrique ou électrostatique ;
- à la suite de l'étape a), ou en amont, on procède à un triage desdites graines selon un critère choisi parmi la taille, le poids, la forme, la densité, un paramètre aérodynamique, colorimétrique ou électrostatique ;
- on mélange auxdites graines au moins une autre matière première choisie dans le groupe constitué par les graines oléagineuses et leurs co-produits, les huiles, les co-produits de graines protéagineuses, les céréales et leurs coproduits, les sources de glucides simples et complexes, ainsi que les tourteaux d'oléagineux ;
- ladite matière première est une source de lipide, préférentiellement une graine oléagineuse ;
- il comporte une étape ultime au cours de laquelle on refroidit lesdites graines.

### DESCRIPTION DETAILLEE DE L'INVENTION

A l'appui de la présente invention, des essais de digestibilité sur les espèces monogastriques cibles ont été réalisées, parmi lesquelles le poulet, le coq, le porc et le poisson ont été retenues.

L'évaluation s'est basée sur :
- la valorisation de l'énergie, laquelle repose sur des approches différentes selon les espèces : Energie métabolisable chez la volaille (EM), coefficient d'utilisation digestive (CUD) de l'énergie chez le porc, coefficient d'utilisation digestive apparente (CUDa) de l'énergie chez le poisson ;
- la valorisation de la protéine, laquelle repose sur la détermination du coefficient d'utilisation digestive de la protéine.

Des essais zootechniques de performance de production sur les mêmes espèces, en l'occurrence le poulet, la poule pondeuse, le porc et le poisson ont également pu être menés.

Dans ce cas, il s'agit soit de montrer des performances de croissance et/ou de ponte supérieures, soit de vérifier si les performances de croissance et/ou de ponte sont identiques au témoin, dès lors que les valeurs nutritionnelles de la solution issue de l'invention sont celles issues des valeurs déterminées précédemment par les essais de digestibilité.

Le procédé de la présente invention consiste en une combinaison d'étapes suivantes :

### Etape a) : utilisation de graines particulières

Utilisation au moins d'une graine protéagineuse rendue particulière du fait qu'elle est à teneur élevée en au moins une (1) composante nutritionnelle, préférentiellement deux (2), trois (3) voire quatre (4), parmi la protéine, l'amidon, ou la matière grasse, et à teneur faible en au moins un facteur antinutritionnel thermostable ou une composante nutritionnelle faiblement valorisable telle que la cellulose brute ou la NDF ("Neutral Detergent Fiber" ou "fibres insolubles dans les détergents neutre").

Sont considérées comme des graines à teneur élevée en protéine, amidon et matière grasse celles dont les teneurs sont supérieures ou égales aux seuils ci-dessous (colonne de droite) :

| Espèce | Composés Nutritionnels | Plage de variation (g/100g MS) | | Graine à teneur élevée (g/kg MS) |
|---|---|---|---|---|
| | | Minimum | Maximum | |
| Féverole | MAT | 25% | 33% | > 28% |
| *Vicia lava L.* | AMIDON | 32% | 49% | > 39% |
| Pois | MAT | 19% | 27% | > 22% |
| *Pisum sativum L.* | AMIDON | 41% | 58% | > 45% |
| Lupin blanc | MAT | 32% | 40% | > 35% |
| *Lupinus albus L.* | MG | 8% | 12% | > 8% |
| Lupin Bleu | MAT | 26% | 44% | > 31% |
| *Lupinus angustifolius L.* | MG | 4% | 8% | > 5.5% |
| Lupin jaune | MAT | 34% | 46% | > 38% |
| *Lupinus luteus L.* | MG | 3% | 7% | > 5% |

Il est effectivement avantageux d'employer les graines les plus riches en protéine et/ou en énergie (en amidon notamment pour la graine de féverole *-Vicia fava L.-* ou la graine de pois - *Pisum sativum L.*- et en lipides pour la graine de lupin blanc - *Lupinus albus L.-* ou de lupin bleu *-Lupinus angustifolius* L.-ou de lupin jaune - *Lupinus luteus L.* pour rendre le procédé plus compétitif d'un point de vue technico-économique ; ceci non seulement du fait de la concentration en nutriments d'intérêts, mais également du fait de l'interaction positive sur les réactions biochimiques lors du procédé technologique (effet synergique).

Sont considérées comme des graines à teneur faible en FAN thermostables ou en composante nutritionnelle faiblement valorisable celles dont les teneurs sont inférieures aux seuils ci-dessous (colonne de droite) :

| Espèce | Facteurs Antinutritionnels Thermostables | Plage de variation (g/100g MS) | | Graines à teneur faible (g/100g MS) |
|---|---|---|---|---|
| | | Minimum | Maximum | |
| Féverole | Tanins | 0.01 | 1.25 | < 0.30 |
| | Vicine, convicine | 0.03 | 2.00 | < 0.50 |
| | Alpha-galactosides | 1.00 | 6.20 | < 2.50 |
| *Vicia lava L.* | Cellulose Brute | 7.00 | 12.00 | < 10 |
| | NDF | 12.40 | 22.10 | < 18 |
| Pois | Tanins | 0.00 | 0.74 | < 0.01 |
| | Alpha -galactosides | 2.30 | 11.30 | < 5 |
| *Pisum sativum L.* | Cellulose Brute | 3.70 | 8.50 | < 7,5 |
| | NDF | 9.00 | 22.00 | < 18 |
| Lupin blanc | Alcaloïdes | 0.01 | 3.00 | < 0.1 |
| | Alpha-galactosides | 6.00 | 14.00 | < 10 |
| *Lupinus albus L.* | Cellulose Brute | 13.60 | 28.10 | < 16 |
| | NDF | 20.50 | 35.20 | < 25 |
| Lupin bleu | Alcaloïdes | 0.01 | 3.00 | < 0.2 |
| | Alpha-galactosides | 6.00 | 14.00 | < 9.0 |
| *Lupinus angustifolius L.* | Cellulose Brute | 13.60 | 28.10 | < 18 |
| | NDF | 20.50 | 35.20 | < 29 |
| Lupin jaune | Alcaloïdes | 0.01 | 3.00 | < 0.3 |
| *Lupinus luteus L.* | Alpha -galactosides | 6 | 16 | < 12.0 |
| | Cellulose Brute | 13.6 | 28.1 | < 18 |
| | NDF | 20.50 | 35.20 | < 29 |

| | | | | |
|---|---|---|---|---|
| (MS= Matière sèche) | | | | |

La variabilité de composition des graines existe au sein d'une même espèce, du fait de facteurs tels que la variété, l'itinéraire cultural, les conditions pédoclimatique.... La sélection des graines protéagineuses sur leur qualité nutritionnelle conduit à avoir des impacts sur les procédés technologiques industriels mis en oeuvre par la suite. En effet la présence de protéines, d'amidon et de lipides dans les matrices, influence la « processabilité » et donc la transformation de ces nutriments, à travers notamment les analyses de la gélatinisation de l'amidon, de la dénaturation des protéines et de la disponibilité de la matière grasse, lesquelles sont connues pour prédire l'amélioration de digestibilité. Les niveaux de passages d'un état à l'autre (solide, vitreux, liquide) sont dépendants de la proportion des nutriments cités précédemment.

Ainsi deux graines d'une même espèce et de compositions différentes, vont, à iso-traitement hydrothermique, réagir différemment ; à savoir que les graines particulières retenues à la 1ère étape de l'invention se caractérisent à l'issue d'un même traitement hydrothermique par une augmentation de la dénaturation des protéines, de la gélatinisation de l'amidon et de la matière grasse disponible, en comparaison aux graines non retenues.

Sous un autre angle, pour un même objectif de dénaturation des protéines, de la gélatinisation de l'amidon et de la matière grasse disponible, les graines particulières retenues à la première étape de l'invention nécessiteront qu'on leur applique un procédé technologique à température, pression, teneur en eau et/ou durée plus faible, c'est-à-dire un procédé plus efficient car nécessitant moins de contrainte(s) technologique(s).

Aussi plus la teneur en amidon et/ou protéines dans les graines de pois et de féverole ainsi que la teneur en protéine et/ou matière grasse dans la graine de lupin est élevée, moins la concentration en fibres est importante. Ainsi, cette moindre incorporation de fibres faiblement valorisable par l'animal conduit à un niveau plus haut de digestibilité, en favorisant la digestibilité des protéines et des autres nutriments. Ces fibres jouent un rôle de « rempart » vis-à-vis des enzymes digestives des animaux en limitant leur accessibilité ; et limitent l'encombrement dans l'intestin qui nuit à l'assimilation des nutriments.

### Etape b) : étape de traitement thermique sous pression

Cette étape consiste à mettre les graines sous une pression minimum de 10 bars, préférentiellement 20 bars, voire 30 bars, pendant un temps supérieur à 10 secondes, préférentiellement de 10 secondes à 2 minutes, dans le but d'atteindre une température supérieure à 80°C, préférentiellement supérieure à 100°C, voire comprise entre 100 et 150°C ; et de façon plus avantageuse encore entre 110 et 140°C ; et sans jamais dépasser 160°C ; température permise avantageusement par auto échauffement du fait des forces de cisaillement, de la friction et de la compression et éventuellement, de manière additionnelle, par un apport thermique exogène par conduction (fluide caloporteur, résistance électrique, champs électromagnétique, ...) ou par ajout de vapeur.

Une liste non exhaustive d'équipements de traitement thermique sous pression capables d'effectuer cette étape est la suivante : extrudeur, cuiseur-extrudeur, expandeur, presse.
Et/ou

### Etape b)bis : étape de traitement thermique sans pression

Cette étape consiste en un traitement thermique sans pression dont la durée est alors allongée, par rapport à l'étape b), de telle sorte qu'elle soit supérieure à 15 minutes, préférentiellement supérieure à 30 minutes, voire de 30 minutes à 2 heures, et que la température soit supérieure à 80°C, préférentiellement supérieure à 90°C, voire comprise entre 90 et 150°C. De la même façon, les équipements appropriés pour ce traitement thermique sans pression sont par exemple : le sécheur, le toasteur, la vis thermostatée.

Cette étape (ces étapes) b) et/ou b)bis a (ont) pour objectif de réduire les facteurs antinutritionnels thermosensibles et de désactiver les enzymes endogènes et/ou exogènes, tout en améliorant la digestibilité de l'énergie et/ou de la protéine et des acides aminés, notamment dans le cas d'un traitement thermique sous pression.

Elle permet enfin, le cas échéant, de réduire l'humidité des graines qui ne devra pas excéder 14% d'humidité, préférentiellement 12%, pour permettre un bon état de conservation du mélange.

Une façon de caractériser l'efficacité de cette étape (ces étapes) b) et/ou b)bis, consiste à évaluer la réduction d'au moins un facteur antinutritionnel thermosensible, dont le tableau ci-dessous présente les objectifs :

| Espèce | Facteurs Antinutritionnels (FAN) Sur matière brute | Plage de variation des graines à teneur en FAN non réduite | | Graines à teneur en FAN réduite |
|---|---|---|---|---|
| | | Minimum | Maximum | |
| Féverole | Lectines (g/100 g) | 2,00 | 13,30 | < 0,10 |
| *Vicia lava L.* | Facteurs antitrypsiques (UTI/mg) | 1,90 | 10,00 | < 1,50 |
| Pois | Lectines (g/100 g) | 0,30 | 1,00 | < 0,10 |
| *Pisum sativum L.* | Facteurs antitrypsiques (UTI/mg) | 1,70 | 15,00 | < 1,50 |

| | | | | |
|---|---|---|---|---|
| (UTI = Unités inhibitrices de la trypsine) | | | | |

Une autre façon consiste à évaluer selon les graines à considérer la proportion en amidon gélatinisé pour atteindre la valeur minimale de 50%, préférentiellement 65%, avantageusement 80% pour le pois et la féverole ; ou la proportion de protéine solubilisée à pH basique pour atteindre la valeur maximale de 55%, préférentiellement 40%, avantageusement 30% pour le pois, la féverole et le lupin ; ou la matière grasse disponible pour atteindre la valeur minimale de 40%, préférentiellement 50%, avantageusement 60% pour le lupin ; ou la digestibilité enzymatique à 1 heure pour atteindre la valeur maximale de 50%, préférentiellement 40%, avantageusement 30% pour le pois et la féverole, et la valeur maximale de 60%, préférentiellement 50%, avantageusement 40% pour le lupin ; ou dans le cas du lupin, la matière grasse disponible pour atteindre la valeur minimal de 40% ; ou bien les teneurs en composés de Maillard tels que le Nε-carboxymethyl-lysine (CML) ou encore l'acrylamide. Les valeurs seuils à ne pas dépasser sont de 0,020 g /kg de matière sèche, préférentiellement 0,018 g, avantageusement 0,015 g de Nε-carboxymethyl-lysine pour la féverole et le pois, et de 0,025 g /kg de matière sèche, préférentiellement 0,020 g, avantageusement 0,018 g de Nε-carboxymethyl-lysine pour le lupin; et de 110 g /kg de matière sèche, préférentiellement 90 g, avantageusement 70 g d'acrylamide pour la féverole et le pois, et de 300 g /kg de matière sèche, préférentiellement 200 g, avantageusement 150 g d'acrylamide pour le lupin.

| ***Critères d'évaluation*** | **Féverole *Vicia faba L.*** | **Pois *Pisum sativum L.*** | **Lupin Lupinus spp.** |
|---|---|---|---|
| Protéine solubilisée à pH basique (%) | < 55% | < 55% | <55% |
| Amidon gélatinisé (%) | > 50% | > 50% | - |
| dE1 (%) | < 50% | < 50% | < 60% |
| MGD (%) | - | - | >40 |
| CML (g/kg MS) | < 0,020 | < 0,020 | < 0,025 |
| Acrylamide (g/kg MS) | <110 | <110 | <300 |

### Etape ultime : Refroidissement

A l'issue de l'étape thermique b), les graines sont chaudes. Elles nécessitent alors d'être refroidies afin de faire descendre les graines issues du procédé à une température leur permettant d'être stables dans le temps, et ainsi d'être conservées et stockées dans de bonnes conditions d'alimentarité jusqu'à leur consommation.

Par exemple, la température devra ne pas dépasser 30°C au-dessus de la température ambiante, préférentiellement 20°C.

Les précédentes étapes du procédé selon l'invention peuvent par ailleurs être mises en oeuvre, de manière avantageuse, tout d'abord en tenant compte des éléments décrits ci-après :

### Mélange et fractionnement des graines

Bien que cette étape ne soit pas obligatoire, le procédé est amélioré dès lors qu'il est mis en oeuvre une étape de fractionnement, voire de mélange, à la suite de l'étape a) du procédé.

Cette étape consiste à choisir au moins une technologie mécanique de mélange, lorsque l'on est en présence d'au moins deux matières premières de nature et/ou de qualité différentes, et/ou d'une technologie mécanique de fractionnement des graines, ou du mélange, paramétrées de telle sorte qu'elles permettent pour la première de réaliser un mélange homogène des graines protéagineuses et des éventuelles matières premières additionnelles (telles que décrites ci-après), et pour la seconde, de rompre les téguments et les amandes des graines afin de rendre plus accessible les nutriments pour les enzymes digestives et, ainsi, améliorer la digestibilité des graines.

Une préférence consiste à pré-mélanger les matières avant leur fractionnement. Il est aussi envisageable d'opérer d'abord le fractionnement séparé des matières puis leur mélange, mais on peut effectuer également deux opérations de mélange, l'une avant le fractionnement, l'autre après.

Les sollicitations mécaniques simples et/ou combinés mises en oeuvre pour remplir ces fonctions peuvent être notamment obtenues par des impacts, des coupes, des compressions, des cisaillements ou des abrasions.

Le fractionnement des graines est caractérisé par la mesure granulométrique qui détermine la taille des particules issues du procédé. Préférentiellement, la taille maximale de 90% des particules issue de ce fractionnement mécanique est inférieure à 2000 µm et préférentiellement inférieure à 1500 µm.

Cette dimension est atteignable grâce par exemple à un broyeur à marteaux horizontal suivant les paramètres ci-dessous :
- pour un équipement d'une capacité de 10 t/h et un moteur de 200 KW, vitesse de rotation : 2800 tr/min et taille des grilles de 3 mm.

Cette dimension peut être atteinte également avec d'autres équipements usuels tels que les broyeurs ou concasseurs à marteaux et à cylindres, les broyeurs à palettes.

Enfin d'autres technologies existent et peuvent également remplir cette fonction : broyeur à meule, broyeur à disques, broyeur à broches, broyeur à tête de coupe, broyeur à billes ou boulets, broyeur ou concasseur à lame, impacteur ou broyeur à impact, etc.

### Traitement thermique préparatoire

Il devient avantageux également de procéder à une étape thermique, à la suite de l'étape a) du procédé, ou de l'étape de fractionnement et/ou de mélange précédemment décrite.

Il faut aussi retenir que cette étape puisse se faire sur graines dépelliculées et tourteau de lin (autre étape avantageuse décrite après).

Cette étape consiste à choisir une technologie thermique paramétrée de telle sorte qu'elle respecte les étapes et caractéristiques suivantes :

### Première possibilité : Etape de préparation hydrothermique :

Cette étape consiste à imprégner les graines de vapeur d'eau et/ou d'un liquide avec de l'eau, dans le but d'atteindre sur les graines préalablement fractionnées, une température entre 30 et 90°C pendant une durée supérieure à 2 minutes et une humidité supérieure à 12%. De façon préférentielle, il convient d'imprégner les graines pendant une durée supérieure à 5 minutes, ou 15 minutes voire 30 minutes, et préférentiellement inférieure à 4 heures, voire 8h, sans dépasser 24h, pour une humidité supérieure à 15%, voire 18% et inférieure préférentiellement à 40%, sans excéder 60%. Et de manière très avantageuse il convient d'imprégner les graines pendant une durée supérieure à 1 heure, voire 2 heures, pour une humidité supérieure à 20%, voire 25%. Cette étape a pour objectif notamment de faciliter l'étape thermique suivante, sous et/ou sans pression, en améliorant les capacités de conduction thermique, en provoquant une activation des enzymes endogènes des graines et en démarrant le traitement thermique suivant.

Les équipements en mesure de pouvoir mettre en oeuvre cette étape sont, de manière non exhaustive : un préparateur, un pré-conditionneur et conditionneur, un cuiseur, un mélangeur, un toasteur, un imprégnateur vapeur, un maturateur.
Ou

### Deuxième possibilité : Etape de préparation hydrothermique et enzymatique :

Cette étape de préparation consiste à appliquer les mêmes conditions de préparation telles que décrites à la rubrique première possibilité. Elle se distingue simplement par le fait qu'on met en activité au moins une enzyme exogène, non présente dans les graines protéagineuses, pouvant être apportée notamment en tant qu'auxiliaire technologique (extraits d'enzymes, etc.), à partir d'additifs, de matières premières brutes ou fermentées, etc. et ajoutée au procédé à l'une des étapes préalables ou bien lors de celle-ci.

Les caractéristiques de température sont alors choisies de telles sortes qu'elles correspondent aux plages d'activités des enzymes retenues, mais demeurant entre 30 et 90°C. Les caractéristiques de durée et d'humidité requises sont les mêmes que celles décrites à la première possibilité, considérant néanmoins que ces enzymes exogènes requièrent des conditions plus favorables que les enzymes endogènes, du fait qu'elles ne sont pas spatialement et temporellement aussi proche de leurs substrats. C'est en ce sens qu'il convient d'adapter les conditions d'imprégnation, de telle sorte que l'imprégnation dure au moins 15 minutes, préférentiellement 60 minutes, et préférentiellement inférieure à 4 heures, voire 8h, sans dépasser 24h, pour une humidité supérieure à 15%, préférentiellement 25% et inférieure préférentiellement à 40%, sans excéder 60%.L'enzyme (ou les enzymes) à introduire appartient (ou appartiennent) aux familles des arabinofuranosidases, béta-glucanases, cellulases, glucoamylases, α-amylases, pectinases, pectine methyl esterases, phytases, protéases, xylanases, et de façon préférentielle, aux familles des xylanases, beta-glucanases et pectinases.

Elle aura (ou elles auront) été préalablement choisie(s) de par son (ou leur) efficacité à hydrolyser les liaisons chimiques particulières que l'animal n'est pas en mesure d'effectuer du tout, ou pas complètement, ou pas suffisamment rapidement.

Elle aura aussi pu être choisie pour sa capacité à dégrader des glucides qui ne sont pas ou mal hydrolysés chez l'animal, permettant ainsi une meilleure accessibilité des autres nutriments des graines par les enzymes digestives de l'animal.

Les équipements en capacité de mettre en oeuvre cette étape sont par exemple : un préparateur, un pré-conditionneur et conditionneur, un cuiseur, un mélangeur, un toasteur, un imprégnateur vapeur, un maturateur, un réacteur, etc.

Il est à noter que l'apport éventuel d'eau, nécessaire à l'amélioration de ce procédé, peut être réalisé au sein des équipements précités mais également en toute ou partie à l'étape de mélange des graines, et que l'apport de vapeur d'eau, également nécessaire à l'amélioration du procédé, peut être réalisé au sein des équipements précités mais également en toute ou partie à l'étape b) du procédé, c'est-à-dire l'étape du traitement thermique sous pression et/ou sans pression.

Les étapes du procédé selon l'invention, avec ou sans ces étapes avantageuses précitées, le cas échéant, peuvent par ailleurs être mises en oeuvre en tenant compte également des éléments décrits ci-après :

### Triage

Cette étape de triage permet de rassembler des graines selon des critères de tailles, de poids, de forme, de densité ou selon des caractéristiques aérodynamique, colorimétrique, électrostatique. Les outils permettant d'effectuer ces opérations sont notamment : le tamiseur, le nettoyeur séparateur, la bluterie, l'épierreur, le plansichter, la table densimétrique, le tarare, le trieur optique, les systèmes d'aération (colonne d'aire, aspiration, soufflerie...), magnétiques.

Cette opération peut avoir pour objectif de séparer des graines d'espèces différentes, de retirer des impuretés, d'alloter des graines d'espèces identiques, etc.

### Décorticage et / ou dépelliculage

Cette étape a pour but d'une part, de concentrer les teneurs en protéines et en énergie sous forme d'amidon, notamment pour ce qui concerne la Féverole et le Pois, et en protéines et en énergie sous forme de lipides pour ce qui concerne le Lupin et, d'autre part, de réduire la proportion de fibres et de facteurs antinutritionnels présents dans les pellicules des graines.

Cette étape de décorticage et/ou dépelliculage est caractérisée par un rendement minimum apprécié à partir de l'effet de concentration en protéines des graines concernées et ci-dessous le tableau des niveaux de concentration attendus :

| | Concentration de la Protéine |
|---|---|
| Féverole | +5%, préférentiellement +15%, voire +20% |
| Pois | +5%, préférentiellement +12%, voire 15% |
| Lupin | +5%, préférentiellement +15%, voire +20% |

Le fait de retirer la pellicule qui est très riche en fibre (et à très faible teneur en protéine), cela va avoir pour effet d'obtenir une teneur en protéine plus élevée dans la graine dépelliculée.

Le décorticage et/ou dépelliculage est réalisé grâce à la combinaison d'une phase de sollicitations mécaniques et d'une phase de séparation à la suite, le cas échéant, d'une possible réhydratation de l'amande des graines, précédée d'une phase de prétraitement thermique facilitant le décorticage et/ou dépelliculage.

Les sollicitations mécaniques simples et/ou combinées mises en oeuvre pour remplir ces fonctions peuvent être des impacts, des compressions ou des abrasions. Les outils permettant d'effectuer ces opérations sont, de manière non exhaustive : les broyeurs ou concasseurs à cylindres et à marteaux, l'impacteur ou le broyeur à impact, le polisseur, le broyeur à palettes, le broyeur à meule, le broyeur à disques, le broyeur à broches, le broyeur à tête de coupe, le broyeur à billes ou boulets, le broyeur ou concasseur à lame.

La séparation peut être réalisée selon des critères de tailles, de poids, de forme, de densité ou selon des caractéristiques aérodynamique, colorimétrique, électrostatique. Les outils permettant d'effectuer ces opérations sont notamment : le tamiseur, le nettoyeur séparateur, la bluterie, l'épierreur, le plansichter, la table densimétrique, le tarare, le trieur optique, les systèmes d'aération (colonne d'aire, aspiration, soufflerie...), magnétiques.

### Fractionnement spécifique et séparation

Une étape de fractionnement spécifique et de séparation peut être ajoutée dans le but d'obtenir des fractions plus concentrées en protéines, glucides et/ou lipides. Elle est à mettre en oeuvre en aval ou en substitution de l'étape dite de décorticage/dépelliculage et/ou de fractionnement.

Cette étape est caractérisée par un rendement minimum concrétisé par une concentration en protéines, glucides ou lipides d'une ou plusieurs des fractions obtenues. Les fractions concentrées en protéines, glucides ou lipides devront préférentiellement contenir au moins 25% de protéines, glucides et/ou lipides de plus que les graines entières d'origine, préférentiellement 35%, voire même 50%.

Cette séparation des fractions, facilité le cas échéant par une étape de décorticage / dépelliculage, sera réalisée d'abord par une étape de sollicitations mécaniques simples et/ou combinés mises en oeuvre avec des équipements tels que les microniseurs, les broyeurs à broches, à cylindres, à marteaux ou à impact par exemple. Et ensuite par une étape de séparation selon des critères de tailles, de poids, de forme, de densité ou selon des caractéristiques aérodynamique, colorimétrique, électrostatique, employant des équipements tels que le tamiseur, le nettoyeur séparateur, la bluterie, la table densimétrique, le turboséparateur, le sélecteur, les systèmes d'aération ou encore magnétiques.

### Utilisation de matière première additionnelle

Il devient avantageux d'utiliser au moins une matière première à ajouter aux graines protéagineuses, matière première qui sera retenue pour ses propriétés technologiques et/ou nutritionnelles et/ou économiques. En effet, en fonction de l'usage qui sera fait des graines ou du mélange issu du procédé, et sa destination en termes d'espèce animale et de stade physiologique notamment, le choix de la (ou des) matière(s) première(s) portera(ront) notamment sur les caractéristiques nutritionnelles et le coût de revient des matières premières.

Mais elles auront également à être choisies sur la base de leurs intérêts technologiques à travers notamment leurs propriétés mécaniques et donc leurs prédispositions à rendre plus avantageux les contraintes mécaniques du procédé, leurs propriétés rhéologiques et physico-chimiques, et donc leurs capacités à se mélanger avec les graines protéagineuses en conditions humides et leurs capacités d'adsorption ou d'absorption de l'eau, dans certains cas leurs capacités à se lier aux protéines, leurs propriétés enzymatiques et donc leurs aptitudes à accentuer les activités enzymatiques notamment pour améliorer la digestibilité des graines protéagineuses.

Avantageusement, les graines protéagineuses sont associées à une part de graines oléagineuses dès lors que la technologie thermique implique une étape de traitement thermique sous pression.

A titre d'exemple, pour faciliter le passage dans l'extrudeur, l'apport de matière grasse préférentiellement issue de graines oléagineuses plutôt que d'une huile, du fait d'un apport plus diffus et homogène de l'agent lubrifiant, permet aux graines protéagineuses d'être technologiquement mieux traitées et d'augmenter les capacités de fabrication.

Enfin, plus globalement, le choix de matière première additionnelle repose préférentiellement sur le potentiel d'amélioration nutritionnelle et économique que peut permettre d'atteindre ledit procédé appliqué aux graines protéagineuses.

C'est ainsi que parmi les matières premières additionnelles, la préférence sera donnée d'abord aux graines oléagineuses, aux huiles, aux céréales et leurs coproduits, aux sources de glucides simples ou complexes, ensuite aux tourteaux d'oléagineux, puis à toutes autres matières premières usuelles en nutrition animale.

### Agitation lors du traitement thermique préparatoire

A l'étape précédemment décrite de traitement thermique préparatoire, un avantage consiste à agiter le mélange afin qu'il subisse des conditions de traitement uniformes. En effet l'agitation permet de :
- homogénéiser les graines fractionnées avec les apports d'eau et autres apports complémentaires éventuels, dans le but notamment de faciliter la fonctionnalité des enzymes apportées pour la mise en contact avec leurs substrats ;
- homogénéiser l'eau ajoutée ainsi que la température au sein des graines ou du mélange ;
- éviter la constitution d'agglomérats et ainsi faciliter les conditions de transport des graines ou du mélange.

Ainsi qu'on le verra plus loin, le procédé selon la présente invention permet d'atteindre des résultats techniques avantageux au regard de l'état de l'art.

En effet, aucun procédé répandu dans la bibliographie ne permet d'atteindre des améliorations techniques et économiques obtenues par le présent procédé, notamment au regard des systèmes récents de production des animaux, qui sont caractérisés par des avancées génétiques significatives adaptées à un système d'alimentation basée essentiellement sur le soja, le maïs grain et les céréales.

L'association des étapes décrites précédemment permet d'obtenir au moins une graine protéagineuse caractérisée comme étant à la fois :

### À teneur supérieure en au moins un (1) composé nutritionnel, préférentiellement deux (2) :

| | Teneur supérieure à | | |
|---|---|---|---|
| Composés Nutritionnels | Protéine (g/100g MS) | Amidon (g/100g MS) | Matière grasse (g/100g MS) |
| Féverole | 28 | 39 | |
| *Vicia fava L.* | | | |
| Pois | 22 | 45 | |
| *Pisum sativum L.* | | | |
| Lupin blanc | 35 | | 8 |
| *Lupinus albus L.* | | | |
| Lupin bleu | 31 | | 5,5 |
| *Lupinus angustifolius L.* | | | |
| Lupin jaune | 38 | | 5,0 |
| *Lupinus luteus L.* | | | |

### À teneur réduite en au moins un facteur antinutritionnel thermostable ou composante nutritionnelle faiblement valorisable, préférentiellement 2, avantageusement 3 voire 4 :

| Espèce | Facteurs Antinutritionnel Thermostables | Plage de variation (g/100g MS) | | Graines à teneur faible (g/100g MS) |
|---|---|---|---|---|
| | | Minimum | Maximum | |
| Féverole | Tanins | 0,01 | 1,25 | < 0,30 |
| | Vicine, convicine | 0,03 | 2,00 | < 0,50 |
| *Vicia lava L.* | Alpha-galactosides | 1,00 | 6,20 | < 2,50 |
| | Cellulose Brute | 7,00 | 12,00 | < 9,00 |
| | NDF | 12,40 | 22,10 | < 16,00 |
| Pois | Tanins | 0,00 | 0,74 | < 0,01 |
| | Alpha-galactosides | 2,30 | 11,30 | < 5,00 |
| *Pisum sativum L.* | Cellulose Brute | 3,70 | 8,50 | < 5,50 |
| | NDF | 9,00 | 22,00 | < 14,00 |
| Lupin blanc | Alcaloïdes | 0,01 | 3,00 | < 0,1 |
| | Alpha-galactosides | 6,00 | 14,00 | < 10 |
| *Lupinus albus L.* | Cellulose Brute | 13,60 | 28,10 | < 16 |
| | NDF | 20,50 | 35,20 | < 25 |
| Lupin bleu | Alcaloïdes | 0,01 | 3,00 | < 0,2 |
| | Alpha-galactosides | 6,00 | 14,00 | < 9,0 |
| *Lupinus angustifolius L.* | Cellulose Brute | 13,60 | 28,10 | < 18 |
| | NDF | 20,50 | 35,20 | < 29 |
| Lupin jaune | Alcaloïdes | 0,01 | 3,00 | < 0,3 |
| | Alpha -galactosides | 6 | 16 | < 12,0 |
| *Lupinus luteus L.* | Cellulose Brute | 13,6 | 28,1 | < 18 |
| | NDF | 20,50 | 35,20 | < 29 |

### À teneur réduite en au moins un facteur antinutritionnel thermosensible :

| Espèce | Facteurs Antinutritionnels (FAN) Sur matière brute | Plage de variation des graines à teneur en FAN non réduite | | Graines à teneur en FAN réduite |
|---|---|---|---|---|
| | | Minimum | Maximum | |
| Féverole | Lectines (g/100g) | 2,00 | 13,30 | < 0,10 |
| *Vicia lava L.* | Facteurs antitrypsiques (UTI/mg) | 1,90 | 10,00 | < 1,50 |
| Pois | Lectines (g/100g) | 0,30 | 1,00 | < 0,10 |
| *Pisum sativum L.* | Facteurs antitrypsiques (UTI/mg) | 1,70 | 15,00 | < 1,50 |

| | | | | |
|---|---|---|---|---|
| (UTI = Unités inhibitrices de la trypsine) | | | | |

À une teneur améliorée en au moins un critère d'évaluation :

| ***Critères d'évaluation*** | **Féverole *Vicia faba L.*** | **Pois *Pisum sativum L.*** | **Lupin Lupinus spp.** |
|---|---|---|---|
| Protéine solubilisée à pH basique (%) * | < 55% | < 55% | < 55% |
| Amidon gélatinisé (%) | > 50% | > 50% | - |
| dE1 (%) | < 50% | < 50% | < 60% |
| MGD (%) | - | - | >40 |
| CML (g/kg MS) | < 0,020 | < 0,020 | < 0,025 |
| Acrylamide (g/kg MS) | <110 | <110 | <300 |

| | | | |
|---|---|---|---|
| *(*): dans la suite de la présente demande, on entend par l'expression "Protéine solubilisée", la protéine solubilisée à pH basique.* | | | |

### À un niveau amélioré de digestibilité de l'énergie et/ou de la protéine et de ses acides aminés :- Pour les monogastriques :

| | Digestibilité Energie (% d'augmentation) | | | Digestibilité Protéine/ Acides amines (% d'augmentation) | | |
|---|---|---|---|---|---|---|
| | Féverole | Pois | Lupins | Féverole | Pois | Lupins |
| Volailles | EM (Kcal) | | | CUD (%) | | |
| | 20% | 20% | 25% | 8% | 5% | 8% |
| Porcs | CUD (%) | | | CUD (%) | | |
| | 20% | 10% | 15% | 8% | 5% | 8% |
| Poisson | CUD (%) | | | CUD (%) | | |
| | 25% | 15% | 18% | 12% | 8% | 12% |
| Autres espèces | % d'augmentation | | | CUD (%) | | |
| | 20% | 10% | 15% | 8% | 4% | 6% |

| | | | | | | |
|---|---|---|---|---|---|---|
| (EM : Energie métabolisable ; CUD : Coefficient d'utilisation digestive)- | | | | | | |

### Pour les ruminants :

| | Dégradabilité théorique (DT) (%) | | | Digestibilité intestinale (dr) % | | |
|---|---|---|---|---|---|---|
| | Féverole | Pois | Lupin | Féverole | Pois | Lupin |
| Ruminants | <65 | <65 | <65 | >98 | >98 | >98 |

Les résultats présentés dans les tableaux ci-dessus se comparent à ceux obtenus avec une graine ayant subi uniquement une étape de fractionnement semblable à celle décrite plus haut et une étape de granulation à une température inférieure à 100°C. Ces résultats sont également issus de la génétique animale actuelle, à savoir de races sélectionnées pour leur productivité.

Ils sont issus des travaux de digestibilité menés sur les espèces monogastriques par des essais in-vivo poulet, poisson et porc ainsi que pour les ruminants par des essais in vivo. Ces essais sont présentés ci-après.

### ESSAIS DE DIGESTIBILITE

### a/ Essai digestibilité poulet de chair standard

Dans une ferme expérimentale, un essai pour déterminer le coefficient d'utilisation digestive de l'azote ainsi que de l'énergie du poulet de chair standard a été mené. L'objectif est d'évaluer l'impact de la sélection des graines des féveroles et du traitement technologique apporté tel que décrit dans l'invention. La valorisation énergétique et la digestibilité de la protéine sont calculées par différence tel que défini par Carré et al., 2013.

| | | ***Caractéristiques de l'invention*** | | | | | |
|---|---|---|---|---|---|---|---|
| | | Féverole A Entière Crue | Féverole A Entière Cuite | Féverole A Amande Cuite | Féverole B Entière Crue | Féverole B Entière Cuite | Féverole B Amande Cuite |
| Sélection des graines | | Non | Non | Non | Oui | Oui | Oui |
| Traitement technologique des graines | | Non | Oui | Oui | Non | Oui | Oui |

| | | **Caractéristiques des graines de féverole (sous forme entière ou dépelliculée)** | | | | | |
|---|---|---|---|---|---|---|---|
| Protéine, g/100g MS | | 29,2 | | 33,3 | 29,1 | | 32 |
| Amidon, g/100g MS | | 39,7 | | 46,7 | 41,4 | | 49,8 |
| Tanins, g/100g MS | | 8,2 | | 2,1 | 5,8 | | 1,7 |
| Vicine + Convicine, g/100g MS | | 7,8 | | 9,2 | 1,1 | | 0,3 |
| Alpha-galactosides, g/100g MS | | 5,2 | | 4,6 | 3,7 | | 3,1 |
| Cellulose brute, g/100g MS | | 10,6 | | 0 | 7,2 | | 0 |
| NDF, g/100g MS | | 15,4 | | 0 | 10,5 | | 0,0 |
| Lectines, g/100g MS | | 7,7 | | 8,5 | 7,0 | | 7,7 |
| Facteurs antitrypsiques, UTI/mg | | 5,2 | | 4,6 | 3,7 | | 3,1 |

| | | **Procédés de traitements des graines de féverole** | | | | | |
|---|---|---|---|---|---|---|---|
| **Mélange** | | Non | Non | Non | Non | Non | Non |
| **Fractionnement** | | Oui | Oui | Oui | Oui | Oui | Oui |
| **Décorticage** | | Non | Non | Oui | Non | Non | Oui |
| **Traitement thermique** | | | | | | | |
| | Température | - | 140°C | 130°C | - | 140°C | 130°C |
| | Durée | - | 20 s | 20 s | - | 20 s | 20 s |
| | Pression | - | 30 bars | 25 bars | - | 30 bars | 25 bars |

| | | **Caractéristiques de graines de féverole traitées** | | | | | |
|---|---|---|---|---|---|---|---|
| Lectines * | | 6,7 | 0,0 | 0,0 | 6,1 | 0,0 | 0,0 |
| Facteurs antitrypsiques ** | | 2,9 | 0,8 | 0,5 | 1,7 | 0,9 | 0,3 |

| | | **Digestibilité des nutriments** | | | | | |
|---|---|---|---|---|---|---|---|
| CUD Matière azotée totale | | 73 | 76 | 76 | 72 | 79 | 80 |
| EM a N, kcal/kg MS | | 2813 | 3068 | 3258 | 2890 | 3313 | 3477 |
| | | | | | | | |
| CUD Matière azotée totale | | 100 | 104 | 104 | 99 | 108 | 110 |
| CUD Energie | | 100 | 109 | 116 | 103 | 118 | 124 |

Ainsi, en combinant les meilleures technologies, de la sélection de graines aux procédés mécaniques et thermomécaniques, nous arrivons à améliorer les niveaux de digestibilité de façon remarquable : +8 d'augmentation de la digestibilité de la protéine, +18% d'augmentation de valeur énergétique chez le poulet, espèce éminemment sensible en termes de digestibilité, ce qui en fait un excellent modèle pour les monogastriques. Lorsqu'un décorticage de la graine de féverole est mené de manière avantageuse, un effet synergique est relevé sur la valorisation de la protéine (+10%) et de l'énergie (+24%) à l'issue d'un traitement thermique. Ces effets sont supérieurs à une simple addition d'une sélection de graine, d'un décorticage de celle-ci et d'un traitement thermique adapté.

### b/ Essai de digestibilité en porc

Dans une ferme expérimentale, un essai pour déterminer les digestibilités fécales et iléales de porc en croissance a été mené. L'utilisation digestive de chaque matière première à tester est obtenue à l'aide de la méthode par différence avec des mesures sur le régime de base et des mesures sur les régimes contenant une fraction du régime de base et l'un des produits à tester.

Pour déterminer la digestibilité fécale des porcs, l'essai est réalisé selon un dispositif décrit par Noblet et al. (1989). Brièvement, le principe est d'incorporer dans un régime de base (blé + tourteau de soja), 35 % d'une des graines à tester et chacun des régimes ainsi préparés est distribué à 5 porcs.

| | | **Caractéristiques de l'invention** | | | | | | |
|---|---|---|---|---|---|---|---|---|
| | | Tourteau de soja | Féverole Entière Crue | Féverole Entière Cuite 1 | Féverole Entière Cuite 2 | Féverole Amande Crue | Féverole Amande Cuite 1 | Féverole Amande Cuite 2 |
| Sélection des graines | | - | Oui | Oui | Oui | Oui | Oui | Oui |
| Traitement technologique des graines | | | Non | Oui | Oui | Non | Oui | Oui |
| | | **Caractéristiques de la ration** | | | | | | |
| EM ration, kcal/kg | | 5360 kcal/kg MS | | | | | | |
| Protéine digestible, g/kg | | 44 g/100g MS | | | | | | |

| | | **Caractéristiques des graines de féverole (sous forme entière ou dépelliculée)** | | | | | | |
|---|---|---|---|---|---|---|---|---|
| | | Tourteau de soja | Féverole Entière Crue | Féverole Entière Cuite 1 | Féverole Entière Cuite 2 | Féverole Amande Crue | Féverole Amande Cuite 1 | Féverole Amande Cuite 2 |
| Protéine, g/100 g MS | | | 31,4 | | | 36,1 | | |
| Amidon, g/100 g MS | | | 38,0 | | | 43,6 | | |
| Tanins, g/100 g MS | | | 0,5 | | | 0,4 | | |
| Vicine + Convicine, g/100 g MS | | | 0,3 | | | 0,3 | | |
| Alpha-galactosides, g/100 g MS | | | 2,6 | | | 2,9 | | |
| Cellulose brute, g/100 g MS | | | 7,0 | | | 1,4 | | |
| NDF, g/100 g MS | | | 13,1 | | | 11,1 | | |
| Lectines, g/100 g MS | | | 2,0 | | | 2,2 | | |
| Facteurs antitrypsiques, UIT/mg | | | 1,9 | | | 2,1 | | |

| | | **Procédés de traitements des Graines de féverole** | | | | | | |
|---|---|---|---|---|---|---|---|---|
| **Mélange** | | - | Non | Non | Non | Non | Non | Non |
| **Fractionnement** | | - | Oui | Oui | Oui | Oui | Oui | Oui |
| **Décorticage** | | - | Non | Non | Non | Oui | Oui | Oui |
| **Préparation thermique** | | | | | | | | |
| | Température | - | - | - | 60°C | - | - | 60°C |
| | Humidité | - | - | - | 14% | - | - | 14% |
| | Durée | - | - | - | 15 min | - | - | 15 min |
| **Traitement thermique** | | | | | | | | |
| | Température | - | - | 110°C | 140°C | - | 110°C | 140°C |
| | Durée | - | - | 20 s | 20 s | - | 20 s | 20 s |
| | Pression | - | - | 20 bars | 30 bars | - | 20 bars | 30 bars |

| | | **Caractéristiques des Graines traitées** | | | | | | |
|---|---|---|---|---|---|---|---|---|
| Lectines, g/100g MS | | - | 6,7 | 2,2 | 0,2 | 6,7 | 6,7 | 1,3 |
| Facteurs antitrypsiques, UTI/mg | | - | 6,6 | 3,0 | 2,6 | 5,6 | 4,4 | 2,8 |

| | | **Coefficient d'utilisation digestive fécale (CUD) des aliments** | | | | | | |
|---|---|---|---|---|---|---|---|---|
| CUD Matière azotée totale | | 84,9 ^{bc} | 82,1 ^{a} | 84,9 ^{bc} | 84,2 ^{b} | 84,1 ^{b} | 88,3 ^{d} | 88,0 ^{cd} |

| | | **Coefficient d'utilisation digestive fécale (CUD) des Graines** | | | | | | |
|---|---|---|---|---|---|---|---|---|
| CUD Matière azotée totale | | - | 80,1 | 85,9 | 84,4 | 84,5 | 93,5 | 92,2 |

Cet essai met en avant l'intérêt du traitement technologique (préparation et traitement thermique) appliqué sur la graine entière, ou dépelliculée, tel que décrit par l'invention pour atteindre un niveau de digestibilité de la matière azotée totale et de l'énergie statistiquement équivalent au régime témoin à base de tourteau de soja. Les deux traitements thermiques appliqués sur la graine conduisent à des résultats sensiblement équivalents. En revanche, l'application d'un décorticage préalable de la graine de féverole sélectionnée permet, lorsque celle-ci n'est pas technologiquement traitée, d'atteindre les CUD de la matière azotée totale et de l'énergie de l'aliment obtenus avec le tourteau de soja. Lorsque l'amande de féverole est technologiquement traitée, tel que l'invention le décrit en termes d'avantage, le CUD est nettement et statistiquement supérieur au tourteau de soja.

### c/ Essai de digestibilité en truite arc-en-ciel

Dans une ferme piscicole expérimentale un essai pour déterminer l'utilisation métabolique de l'énergie et de la protéine est mené. La valorisation énergétique et la digestibilité de la protéine sont calculées par différence tel que défini par Choubert et al., 1982. Les graines de féveroles sélectionnées et traitées ainsi que leurs coefficients d'utilisation digestives sont présentés dans le tableau ci-après.

| | **Caractéristiques de l'invention** | | | | | | |
|---|---|---|---|---|---|---|---|
| | Tourteau de soja | Féverole Entière Crue | Féverole Entière Cuite 1 | Féverole Entière Cuite 2 | Féverole Amande Crue | Féverole Amande Cuite 1 | Féverole Amande Cuite 2 |
| Sélection des graines | - | Oui | Oui | Oui | Oui | Oui | Oui |
| Traitement technologique des graines | | Non | Oui | Oui | Non | Oui | Oui |

| | **Caractéristiques des graines de féverole (sous forme entière ou dépelliculée)** | | | | | | |
|---|---|---|---|---|---|---|---|
| Protéine, g/100 g MS | | 31,4 | | | 36,1 | | |
| Amidon, g/100 g MS | | 38 | | | 43,6 | | |
| Tanins, g/100 g MS | | 0,5 | | | 0,4 | | |
| Vicine + Convicine, g/100 g MS | | 0,3 | | | 0,3 | | |
| Alpha-galactosides, g/100 g MS | | 2,6 | | | 2,9 | | |
| Cellulose brute, g/100 g MS | | 7,0 | | | 1,4 | | |
| NDF, g/100 g MS | | 13,1 | | | 11,1 | | |
| Lectines, g/100 g MS | | 2 | | | 2,2 | | |
| Facteurs antitrypsiques, UIT/mg | | 1,9 | | | 2,1 | | |

| | **Procédés de traitements des Graines de féverole** | | | | | | |
|---|---|---|---|---|---|---|---|
| **Mélange** | - | Non | Non | Non | Non | Non | Non |
| **Fractionnement** | - | Oui | Oui | Oui | Oui | Oui | Oui |
| **Décorticage** | - | Non | Non | Non | Oui | Oui | Oui |
| **Préparation thermique** | | | | | | | |
| Température | - | - | - | 60°C | - | - | 60°C |
| Humidité | - | - | - | 14 % | - | - | 14 % |
| Durée | - | - | - | 15 min | - | - | 15 min |
| **Traitement thermique** | | | | | | | |
| Température | - | - | 110°C | 140°C | - | 110°C | 140°C |
| Durée | - | - | 20 s | 20 s | - | 20 s | 20 s |
| Pression | - | - | 20 bars | 30 bars | - | 20 bars | 30 bars |

| | **Caractéristiques des Graines de féverole traitées** | | | | | | |
|---|---|---|---|---|---|---|---|
| | Tourteau de soja | Féverole Entière Crue | Féverole Entière Cuite 1 | Féverole Entière Cuite 2 | Féverole Amande Crue | Féverole Amande Cuite 1 | Féverole Amande Cuite 2 |
| Lectines, g/100g MS | - | 6,7 | 2,2 | 0,2 | 6,7 | 6,7 | 1,3 |
| Facteurs antitrypsiques, UTI/mg | - | 6,6 | 3,0 | 2,6 | 5,6 | 4,4 | 2,8 |
| Protéine solubilisée, % | - | 71 | 51 | 23 | 58 | 35 | 24 |
| Amidon gélatinisé, % | - | 7 | 66 | 83 | 7 | 68 | 85 |
| CML, g/kg MS | - | 0,007 | 0,016 | 0,021 | 0,008 | 0,018 | 0,023 |
| Acrylamide, g/kg MS | - | < 30 | 35 | 62 | < 30 | 38 | 65 |
| DE1, % | - | 81 | 36 | 35 | 85 | 46 | 39 |

| | **Coefficient d'utilisation digestive (CUD) des matières premières** | | | | | | |
|---|---|---|---|---|---|---|---|
| CUD Matière sèche | 83,8 ^{cd} | 53,8 ^{a} | 68,5 ^{b} | 67,9 ^{b} | 72,4 ^{bc} | 71,7 ^{bc} | 78,7 ^{d} |
| CUD Energie | 84,7 ^{c} | 56,9 ^{a} | 70,8 ^{b} | 71,9 ^{b} | 74,6 ^{bc} | 77,1 ^{bc} | 83,4 ^{c} |
| CUD Protéine | 97,4 ^{c} | 83,5 ^{a} | 89,8 ^{b} | 92,5 ^{bc} | 91,1 ^{b} | 93,5 ^{bc} | 96,7 ^{c} |
| CUD Amidon | - | 74,5 ^{a} | 84,5 ^{b} | 81,4 ^{b} | 75,0 ^{a} | 75,8 ^{a} | 85.0^{b} |

*Dans le tableau ci-dessus et les suivants, les valeurs qui ont une lettre identique en exposant ne sont pas significativement différentes au seuil de 5%.*

Le traitement des graines de féverole sélectionnées par des procédés de préparation et de traitement thermique conduit à améliorer la digestibilité de la matière sèche, de l'énergie, de la protéine et de l'amidon par rapport aux graines de féverole non traitées. Les deux procédés thermiques conduisent à des résultats qui ne sont pas significativement différents l'un l'autre. Il existe cependant une différence numérique en faveur d'une préparation ainsi que d'un traitement thermique plus poussé (température, pression).

L'usage avantageux du décorticage des graines de féverole, en préalable du traitement thermique, permet de poursuivre l'amélioration de la digestibilité des nutriments tel que l'énergie, et la protéine amenant ainsi celle-ci au niveau du tourteau de soja.

Cet essai met en avant l'intérêt de l'invention quant au traitement des graines de féverole sur la digestibilité des nutriments ainsi que de l'usage avantageux du décorticage, dans la perspective de remplacer le tourteau de soja.

Ces résultats de digestibilité intrinsèque des graines, s'ils expriment les effets liés au procédé technologique de l'invention (synergie sélection des graines et traitements technologique), il faut retenir qu'ils n'expriment pas les effets synergiques de l'invention au niveau de la digestion par l'animal. Certains des résultats de digestibilité sont obtenus selon les méthodes usuelles et utilisées dans les illustrations précédentes. En revanche d'autres phénomènes sont impliqués à l'issus de la digestion par l'animal et ont des effets sur le métabolisme de l'animal. En effet si les facteurs antinutritionnels peuvent être impliqués dans la valeur de digestibilité de la graine, ils sont aussi à l'origine de troubles digestifs et métaboliques induisant des baisses d'ingestion et de performances de production, des perturbations physiologiques et des pathologies diverses. C'est ainsi que le présent procédé a l'avantage de ne pas se contenter d'atteindre des hauts niveaux dits de digestibilité des graines protéagineuses, mais aussi d'éviter les contre-performances et autres problèmes de santé rattachés à la présence significative de facteurs antinutritionnels.

Par exemple, la vicine et la convicine de la féverole ont pour effet la diminution du poids des oeufs et de l'intensité de ponte chez les poules pondeuses. Les lectines, quant à elles, ont des propriétés d'agglutination des hématies du sang pouvant se traduire par des retards de croissance. Et pour ce qui concerne les oligosaccharides, ils sont métabolisés par les microorganismes du colon et provoquent, du fait de leur fermentation, une gêne au niveau digestif (flatulences, diarrhées) susceptible de réduire l'ingestion d'aliment causant une dégradation des performances de croissance.

Fort de ces avantages, l'invention se traduit par des résultats zootechniques jusqu'alors inégalés en élevages.
Ci-après sont présentés plusieurs essais zootechniques qui ont été menés avec différentes espèces et au sein de différents élevages, permettant de valider en conditions de production les avantages techniques obtenus par l'invention.

### al Essai zootechnique chez la poule pondeuse

Dans une ferme expérimentale, on a introduit dans l'alimentation des poules pondeuses (Isa-Brown), pendant environ 3 mois, 15 % de mélanges de graine de féverole 90% et de graine de lin 10% issus de différents procédés dont on a préalablement déterminé les valeurs d'EM et de CUD N.

Compte tenu de la méthodologie retenue qui consiste à formuler les aliments pondeuses en iso-nutritionnels (énergie métabolisable, acides aminés essentiels digestibles, calcium, phosphore...) en prenant en compte les différences de valeurs de digestibilité évaluées plus tôt, l'objectif de cet essai était de vérifier si, grâce à l'effet synergique d'une réduction en facteurs antinutritionnels (dont les effets ne sont pas intégrés dans les valeurs de digestibilité), l'invention permettait d'obtenir un niveau de performance zootechnique supérieur.

Ainsi, sont présentées dans le tableau ci-dessous :
- les caractéristiques nutritionnelles retenues pour la féverole issue de l'invention d'une part et pour la féverole standard, ayant simplement subi un broyage d'autre part ; lesquelles valeurs ont été préalablement déterminées par l'étude de leur digestibilité selon les protocoles habituels connus de l'Homme de l'art ;
- les performances de ponte en termes de poids d'oeuf, de masse d'oeuf exporté (prenant en compte le nombre d'oeufs pondus) et l'indice de consommation (efficacité alimentaire pour produire un oeuf).

| | | **Caractéristiques de l'invention** | | | | | |
|---|---|---|---|---|---|---|---|
| | | **Tourteau de soja** | **Féverole A Crue** | **Féverole A Cuite 1** | **Féverole A Cuite 2** | **Féverole B Crue** | **Féverole B Cuite 2** |
| | Sélection des graines | - | Non | Non | Non | Oui | Oui |
| | Traitement technologique des graines | | Non | Oui | Oui | Non | Oui |

| | | **Caractéristiques de la ration** | | | | | |
|---|---|---|---|---|---|---|---|
| | EM ration, kcal/kg | **2800** | | | | | |
| | Lys digestible, g/kg | **6,9** | | | | | |

| | | **Caractéristiques des graines de féverole** | | | | | |
|---|---|---|---|---|---|---|---|
| | Protéine, g/100 g MS | | 29,2 | | | 29,1 | |
| | Amidon, g/100 g MS | | 39,7 | | | 41,4 | |
| | Tanins, g/100 g MS | | 0,82 | | | 0,58 | |
| | Vicine + Convicine, g/100 g MS | | 0,78 | | | 0,11 | |
| | Alpha-galactosides, g/100 g MS | | 3,0 | | | 2,4 | |
| | Cellulose brute, g/100 g MS | | 10,6 | | | 7,2 | |
| | NDF, g/100 g MS | | 18,9 | | | 15,4 | |
| | Lectines, g/100 g MS | | 5,2 | | | 2,0 | |
| | Facteurs antitrypsiques, UIT/mg | | 5,2 | | | 3,7 | |

| | | **Procédés de traitements des Graines de féverole** | | | | | |
|---|---|---|---|---|---|---|---|
| | | **Tourteau de soja** | **Féverole A Crue** | **Féverole A Cuite 1** | **Féverole A Cuite 2** | **Féverole B Crue** | **Féverole B Cuite 2** |
| **Mélange** | | - | Non | Non | Non | Non | Non |
| **Fractionnement** | | - | Oui | Oui | Oui | Oui | Oui |
| **Préparation thermique** | | | | | | | |
| | Température | - | - | - | 60°C | - | 60°C |
| | Humidité | - | - | - | 14% | - | 14% |
| | Durée | - | - | - | 15 min | - | 15 min |
| **Traitement thermique** | | | | | | | |
| | Température | - | - | 90°C | 140°C | - | 140°C |
| | Durée | - | - | 20 s | 20 s | - | 20 s |
| | Pression | - | - | 15 bars | 30 bars | - | 30 bars |

| | | **Caractéristiques des Graines de féverole traitées** | | | | | |
|---|---|---|---|---|---|---|---|
| EM Graine de féverole, kcal/kg | | | 2813 | 2983 | 3068 | 2890 | 3313 |
| CUD N Graine de féverole, % | | | 73 | 75 | 76 | 72 | 79 |
| Lectines, g/100g MS | | | 5,2 | 5,2 | 0,0 | 2,0 | 0,0 |
| Facteurs antitrypsiques, UTI/mg | | | 2,9 | 2,4 | 0,8 | 3,7 | 0,9 |

| | | **Performance de production des pondeuses** | | | | | |
|---|---|---|---|---|---|---|---|
| Poids des oeufs, g | | 61,9 ^{bc} | 62,2 ^{ab} | 62,2 ^{ab} | 62,1 ^{ab} | 62,6 ^{a} | 62,8 ^{a} |
| Masse exportée, g/j | | 61,0 ^{ab} | 60,5 ^{b} | 59,7 ^{c} | 61,1 ^{ab} | 60,2 ^{b} | 62,0 ^{a} |
| Indice de consommation | | 1,92 ^{c} | 1,97 ^{ab} | 2,00 ^{a} | 1,94 ^{b} | 1,97 ^{ab} | 1,92 ^{c} |

Il en ressort, comparativement au lot témoin avec tourteau de soja, lequel est déjà très bien caractérisé en termes de valeurs de digestibilité et de performances de production, que :
Les résultats obtenus avec la graine de féverole standard, non issue de l'invention, sont inférieurs au témoin « tourteau de soja », mettant en évidence les effets négatifs des facteurs antinutritionnels sur les performances de ponte de la poule. En effet, on constate principalement que les poules de ce lot ont une moindre masse d'oeuf exportée malgré un poids d'oeufs semblable, voire un peu supérieur, ce qui signifie qu'elles ont pondu moins d'oeufs ; mais également qu'elles ont dû consommer plus d'aliment pour produire une même quantité d'oeufs, signe d'une perte d'efficacité alimentaire (augmentation de l'indice de consommation).

Les résultats obtenus avec la graine de féverole standard, technologiquement traitée mais à un niveau moindre que celui de l'invention conduit à de moindres performances de productions. Le traitement technologique appliqué sur une graine non sélectionnée n'est pas assez efficace pour réduire la teneur en facteurs antinutritionnels et ainsi augmenter significativement la valeur nutritionnelle de la graine.

Les résultats obtenus avec la graine de féverole sélectionnée mais non technologiquement traitée conduit à des performances qui, malgré une valeur nutritionnelle intrinsèque plus élevée que la graine non sélectionnée, restent en deçà du lot témoin avec du tourteau de soja. La graine de féverole ne peut être bien valorisée par la poule pondeuse sans un traitement technologique.

Alors que la valorisation nutritionnelle de la féverole issue de l'invention (Graine de féverole Essai) était déjà significativement supérieure à la féverole standard, les résultats obtenus avec la graine de féverole de l'invention montrent une amélioration du poids d'oeuf et de la masse exportée, sans modifier l'indice de consommation.

C'est ainsi que l'on observe l'avantage de la sélection et du procédé selon l'invention. Non seulement la graine protéagineuse dudit procédé se caractérise par des valeurs nutritionnelles supérieures dans le cadre d'études dites de digestibilité, mais elle permet en même temps d'enrayer les effets néfastes des facteurs antinutritionnels tout en réussissant à atteindre des performances de production supérieures au tourteau de soja, signes de l'effet synergique recherché au stade de la valorisation par l'animal

### b/Essai zootechnique et économique chez la volaille de chair Label

Dans une ferme de référence de poulet de type label, deux bâtiments identiques de 4400 poulets ont été alimentés selon 2 programmes alimentaires. Le programme habituel à base de tourteau de soja est comparé au programme sans soja à base de graines protéagineuses de l'invention.

Les performances technico-économiques ont été évaluées à partir des relevés de consommation, de poids des animaux, de croissance, d'indice de consommation, de mortalité et de surcoût alimentaire.

Dans cet essai, les valeurs nutritionnelles de la féverole utilisée pour la formulation des aliments reposaient non pas sur les valeurs dites de digestibilité, mais sur les valeurs issues de la bibliographie. L'objectif était donc de vérifier si les performances zootechniques des poulets allaient bien être supérieures au lot témoin, et s'ils l'étaient, de calculer à combien aurions-nous dû évaluer les valeurs nutritionnelles de la graine de féverole. Les éléments sont présentés ci-dessous :

| | | **Caractéristiques de l'invention** | |
|---|---|---|---|
| | | Tourteau de soja | Féverole Cuite |
| | Sélection des graines | - | Oui |
| | Traitement technologique des graines | | Oui |

| | | **Caractéristiques de la ration** | |
|---|---|---|---|
| | EM ration, kcal/kg | 2800 | |
| | Lys digestible, g/kg | 6,9 | |

| | | **Caractéristiques des graines de féverole** | |
|---|---|---|---|
| | Protéine, g/100 g MS | 51,6 | 29,2 |
| | Amidon, g/100 g MS | 5,7 | 41,8 |
| | Tanins, g/100 g MS | 0,69 | 0,49 |
| | Vicine + Convicine, g/100 g MS | - | 0,15 |
| | Alpha-galactosides, g/100 g MS | 4,0 | 2,2 |
| | Cellulose brute, g/100 g MS | 5,9 | 7,3 |
| | NDF, g/100 g MS | 12,5 | 13,0 |
| | Lectines, g/100 g MS | - | 2,4 |
| | Facteurs antitrypsiques, UIT/mg | 20,0 | 3,0 |

| | | **Procédés de traitements des Graines de féverole** | |
|---|---|---|---|
| | | Tourteau de soja | Féverole Cuite |
| **Mélange** | | - | Non |
| **Fractionnement** | | - | Oui |
| **Préparation thermique** | | | |
| | Température | - | 60°C |
| | Humidité | - | 14 % |
| | Durée | - | 15 min |
| **Traitement thermique** | | | |
| | Température | - | 140°C |
| | Durée | - | 20 s |
| | Pression | - | 30 bars |

| | | **Caractéristiques des Graines de féverole traitées** | |
|---|---|---|---|
| EM Graine de féverole, kcal/kg | | - | 3305 |
| CUD N Graine de féverole, % | | - | 78 |
| Lectines, g/100g MS | | - | 0,0 |
| Facteurs antitrypsiques, UTI/mg | | - | 0,8 |

| | | **Performance de production des poulets** | |
|---|---|---|---|
| Age abattage, j | | 82 | 82 |
| Poids final, kg | | 2,184 | 2,349 *** |
| Gain moyen quotidien, g/j | | 26,63 | 28,65 *** |
| Indice de consommation économique | | 2,913 | 2,740 *** |
| Kg produits / m² | | 23,46 | 25,10 ** |
| Rapport eau / aliment | | 1,40 | 1,43 * |
| Indice de performances | | 89,3 | 101,5 *** |
| Coût programme alimentaire, €/t | | 295,00 | 300,80 |
| Coût alimentaire total, base 100 | | 100 | 102,63 |
| Marge poussin - aliment, base 100 | | 100 | 121,10 |

Ainsi, les résultats techniques obtenus grâce à l'invention ont largement compensé le surcoût alimentaire.

C'est ainsi que la substitution du tourteau de soja par la solution proposée selon l'invention à hauteur de 8% de l'alimentation a engendré une amélioration significative des performances techniques (poids +7,5%, GMQ +7,6%, IC -5,9% et indice de performances +13,9%) et économiques.

D'après ces résultats zootechniques, les valeurs de digestibilité de la solution selon l'invention ne peuvent expliquer à elles seules l'amélioration des performances. En effet, alors que les résultats de digestibilité ont été évalués à 3313kcal d'énergie métabolisable et 79% de coefficient d'utilisation digestive de la protéine, par calcul, les performances ainsi obtenues permettent d'estimer une augmentation de 11% de l'énergie métabolisable (soit 3675 kcal) et de 5% du coefficient d'utilisation digestive de la protéine (soit 83%).

Cela est le signe d'un effet synergique lié à une meilleure expression au niveau du métabolisme de l'animal, que l'on peut rattacher à la réduction des facteurs antinutritionnels.

### c/ Essai zootechnique, environnemental et économique chez le poulet de chair standard

Dans une ferme expérimentale, un essai pour déterminer les performances de croissance des poulets de chair a été mené. Cet essai a été conduit sur des poulets mâles ROSS PM3 recevant des aliments où les principales sources protéiques étaient du tourteau de soja ou bien des graines de féverole non sélectionnées et non technologiquement traitées (Féverole Crue) ou encore des graines de féverole issues de l'invention (sélection & traitement technologique) appelé « Féverole Cuite ». Ces sources protéiques étaient incorporées à hauteur de 15% dans l'aliment croissance (EM : 2950 kcal/kg ; LYS digestible : 11g/kg) et 20% dans l'aliment finition (EM : 3000 kcal/kg ; LYS digestible : 10g/kg). Ces aliments présentaient les mêmes caractéristiques nutritionnelles que le SOJA. Les performances zootechniques ont été relevées, les impacts environnementaux (ECOALIM) et économiques (conjoncture 2018) de ces produits ont été déterminés.

| | | **Caractéristiques de l'invention** | | |
|---|---|---|---|---|
| | | Tourteau de soja | Féverole Crue | Féverole Cuite |
| | Sélection des graines | | Non | Oui |
| | Traitement technologique des graines | | Non | Oui |

| | | **Caractéristiques de la ration** | | |
|---|---|---|---|---|
| | EM ration, kcal/kg | Croissance : 2950 \| Finition : 3000 | | |
| | Lys digestible, g/kg | Croissance : 11 \| Finition : 10 | | |

| | | **Caractéristiques des graines de féverole** | | |
|---|---|---|---|---|
| | | Tourteau de soja | Féverole Crue | Féverole Cuite |
| Protéine, g/100 g MS | | | 29,2 | Oui |
| Amidon, g/100 g MS | | | 39,7 | 43,2 |
| Tanins, g/100 g MS | | | 0,82 | 0,54 |
| Vicine + Convicine, g/100 g MS | | | 0,78 | 0,29 |
| Alpha-galactosides, g/100 g MS | | | 3,0 | 2,4 |
| Cellulose brute, g/100 g MS | | | 10,6 | 8,8 |
| NDF, g/100 g MS | | | 18,9 | 18,7 |
| Lectines, g/100 g MS | | | 5,2 | 3,0 |
| Facteurs antitrypsiques, UIT/mg | | | 5,2 | 2,5 |

| | | **Procédés de traitements des Graines de féverole** | | |
|---|---|---|---|---|
| **Mélange** | | - | Non | Non |
| **Fractionnement** | | - | Oui | Oui |
| **Préparation thermique** | | | | |
| | Température | - | - | 60°C |
| | Humidité | - | - | 14% |
| | Durée | - | - | 15 min |
| **Traitement thermique** | | | | |
| | Température | - | - | 140°C |
| | Durée | - | - | 20 s |
| | Pression | - | - | 30 bars |

| | | **Caractéristiques des Graines de féverole traitées** | | |
|---|---|---|---|---|
| EM Graine de féverole, kcal/kg | | | 2813 | 3313 |
| CUD N Graine de féverole, % | | | 73 | 79 |
| Lectines, g/100g MS | | | 5,2 | 0 |
| Facteurs antitrypsiques, UTI/mg | | | 2,9 | 0,9 |

| | | **Performances de production des poulets** | | |
|---|---|---|---|---|
| Indice de consommation | | 1,456 | 1,460 | 1,444 |

| | | **Performances environnementales** | | |
|---|---|---|---|---|
| Conso Phosphore | | 100 | 79 | 64 |
| Conso énergie fossile | | 100 | 84 | 79 |
| Changement climat | | 100 | 72 | 59 |
| Acidification | | 100 | 82 | 83 |
| Eutrophisation | | 100 | 102 | 99 |
| Occupation des sols | | 100 | 119 | 114 |

| | | **Performances économiques** | | |
|---|---|---|---|---|
| Cout alimentaire à la production de 100 kg poids vif | | 40,20 € | 39,03 € | 39,45 € |
| Coût à la consommation annuelle de poulet | | 7,64 € | 7,42 € | 7,50 € |

Les performances de croissance des poulets des lots Tourteau de soja, Féverole Crue et Féverole Cuite, ayant consommés des aliments iso-nutritionnels, sont statistiquement identiques. Les indices de consommation, bien que non significativement différents présentent des valeurs qui sont numériquement en faveur de la féverole issue de l'invention. Cette dernière présente un indice de consommation (1,444) inférieur aux lots Tourteau de Soja (1,456) et au lot Féverole Crue (1,460). Des performances de croissance identiques constatées alors que les poulets de chair standards ont dans leur auge un aliment aux mêmes valeurs nutritionnelles signifie que ces aliments ont été correctement estimés sur leur volet nutritionnel. Ces résultats valident les teneurs en EM et LYS digestible des féveroles de l'essai et particulièrement celles issues de l'invention. Et dans une moindre mesure que chez la poule pondeuse, nous mettons en avant un effet synergique de l'invention à travers les performances animales.

L'impact environnemental de la production de poulet avec une alimentation à base de féveroles issue de l'invention est, positif sur le changement climatique (-41%), la consommation de phosphore (-36%), la consommation d'énergie fossile (-22%) et l'acidification (-18%) ; neutre sur l'eutrophisation (-2%) et négatif sur l'occupation des sols (+13%). Les mêmes impacts environnementaux de la production de poulet avec des féveroles non issues de l'invention présentent des valeurs intermédiaires.

L'impact économique de la production de poulet de chair, évalué au travers de la part liée à l'alimentation qui représente environ les deux tiers des coûts de production, est de 40,20 € et de 39,45 € / 100 kg de poids vif soit une baisse de -1,9 %. Sur la base de la consommation française de poulet qui est de 19,0 kg/an, l'impact est tout autant neutre puisqu'il permet d'économiser 0,14 €/an. L'impact économique de la production et de la consommation de poulet nourris avec des graines non issues de l'invention est moindre.

Cet essai témoigne du double intérêt de l'invention quant à la sélection des graines de féverole ainsi qu'à un traitement technologique adapté. Cet intérêt porte tout à la fois sur la valorisation par le poulet de chair standard de la féverole issue de l'invention ; que sur son poids environnemental bénéfique à l'invention ; que sur son poids économique pour le consommateur français. L'introduction de graines protéagineuses issues de l'invention est ainsi validée sur le poulet de chair standard.

### d/ Essai de zootechnie en truie arc-en-ciel

Dans une ferme expérimentale, un essai pour déterminer les performances de croissance des truites arc-en-ciel a été mené. Les valeurs nutritionnelles des graines de féverole sélectionnées comme décrites dans l'invention, technologiquement traitées ou non comme décrit dans l'invention et décortiquées ou non, ont été évaluée préalablement chez des juvéniles de truite arc-en-ciel élevées à 17°C en pisciculture.

Les aliments, iso-énergétiques (23-24 kJ/g MS) et iso-azotés (43-45%MS), contenaient comme source de protéines 21% de farine de poisson et, 25% des graines de féverole à tester ou 25% de tourteau de soja. Après mélange et broyage des matières premières constitutives de l'aliment poisson, celui-ci a subi un processus de thermo-cuisson dans un extrudeur double vis puis a été granulé. Ces aliments ont été distribués aux lots de truites, en ad libitum, pendant 84 jours.

| | | **Caractéristiques de l'invention** | | | | | | |
|---|---|---|---|---|---|---|---|---|
| | | Tourteau de soja | Féverole Entière Crue | Féverole Entière Cuite 1 | Féverole Entière Cuite 2 | Féverole Amande Crue | Féverole Amande Cuite 1 | Féverole Amande Cuite 2 |
| | Sélection des graines | - | Oui | Oui | Oui | Oui | Oui | Oui |
| | Traitement technologique des graines | - | Non | Oui | Oui | Non | Oui | Oui |

| | | **Caractéristiques de la ration** | | | | | | |
|---|---|---|---|---|---|---|---|---|
| | EM ration, kcal/kg | 5360 kcal/kg MS | | | | | | |
| | Protéine digestible, g/kg | 44 g/100g MS | | | | | | |

| | | **Caractéristiques des graines de féverole (sous forme entière ou dépelliculée)** | | | | | | |
|---|---|---|---|---|---|---|---|---|
| | | Tourteau de soja | Féverole Entière Crue | Féverole Entière Cuite 1 | Féverole Entière Cuite 2 | Féverole Amande Crue | Féverole Amande Cuite 1 | Féverole Amande Cuite 2 |
| Protéine, g/100 g MS | | | 31,4 | | | 36,1 | | |
| Amidon, g/100 g MS | | | 38,0 | | | 43,6 | | |
| Tanins, g/100 g MS | | | 0,5 | | | 0,4 | | |
| Vicine + Convicine, g/100 g MS | | | 0,3 | | | 0,3 | | |
| Alpha-galactosides, g/100 g MS | | | 2,6 | | | 2,9 | | |
| Cellulose brute, g/100 g MS | | | 7,0 | | | 1,4 | | |
| NDF, g/100 g MS | | | 13,1 | | | 5,5 | | |
| Lectines, g/100 g MS | | | 2,0 | | | 2,2 | | |
| Facteurs antitrypsiques, UIT/mg | | | 1,9 | | | 2,1 | | |

| | | **Procédés de traitements des Graines de féverole** | | | | | | |
|---|---|---|---|---|---|---|---|---|
| **Mélange** | | - | Non | Non | Non | Non | Non | Non |
| **Fractionnement** | | - | Oui | Oui | Oui | Oui | Oui | Oui |
| **Décorticage** | | - | Non | Non | Non | Oui | Oui | Oui |
| **Préparation thermique** | | | | | | | | |
| | Température | - | - | - | 60°C | - | - | 60°C |
| | Humidité | - | - | - | 14 % | - | - | 14 % |
| | Durée | - | - | - | 15 min | - | - | 15 min |
| **Traitement thermique** | | | | | | | | |
| | Température | - | - | 110°C | 140°C | - | 110°C | 140°C |
| | Durée | - | - | 20 s | 20 s | - | 20 s | 20 s |
| | Pression | - | - | 20 bars | 30 bars | - | 20 bars | 30 bars |

| | | **Caractéristiques des Graines de féverole traitées** | | | | | | |
|---|---|---|---|---|---|---|---|---|
| CUD Protéine, % | | 97,4 | 83,5 | 89,3 | 92,5 | 91,1 | 93,5 | 96,7 |
| CUD Energie, % | | 84,7 | 56,9 | 70,8 | 71,9 | 74,6 | 77,1 | 83,4 |
| Lectines, g/100g MS | | - | 6,7 | 2,2 | 0,2 | 7,3 | 6,7 | 1,3 |
| Facteurs antitrypsiques, UTI/mg | | - | 6,6 | 3,0 | 2,6 | 7,2 | 4,4 | 2,8 |
| | | | | | | | 35 | 24 |

| | | **Performances de production des truites** | | | | | | |
|---|---|---|---|---|---|---|---|---|
| | | Tourteau de soja | Féverole Entière Crue | Féverole Entière Cuite 1 | Féverole Entière Cuite 2 | Féverole Amande Crue | Féverole Amande Cuite 1 | Féverole Amande Cuite 2 |
| Indice de consommation | | 3,17 | 3,18 | 3,17 | 3,18 | 3,49 | 3,14 | 3,20 |
| Consommation relative journalière | | 1,24 ^{ab} | 1,33 ^{b} | 1,26 ^{b} | 1,28 ^{ab} | 1,36 ^{ab} | 1,20 ^{bc} | 1,20 ^{a} |
| Efficacité alimentaire | | 1,13 ^{ab} | 1,05 ^{a} | 1,11 ^{ab} | 1,11^{ab} | 1,11^{ab} | 1,14 ^{ab} | 1,19 ^{b} |
| Efficacité protéique | | 2,65 ^{ab} | 2,52 ^{ab} | 2,69 ^{a} | 2,67 ^{ab} | 2,58 ^{ab} | 2,73 ^{ab} | 2,88 ^{b} |

Aucune différence de performances zootechniques comparé au témoin SOJA, cependant les traitements technologiques impactent significativement la consommation alimentaire et l'efficacité alimentaire des aliments contenant les graines issues de l'invention : (i) la préparation et le traitement thermique, tel que décrit par l'invention, améliore l'efficacité alimentaire et l'efficacité protéique, lié à une baisse de la consommation alimentaire, (ii) le décorticage couplé au traitement thermique améliore aussi l'efficacité des aliments.

Dans le contexte de cet essai, l'incorporation de 25% dans l'aliment des graines de féverole issues de l'invention, en comparaison au tourteau de soja et dans des formules iso-nutritionnelles, a permis d'atteindre des mêmes niveaux de performances de croissance des truites. Il apparaît même que certaines combinaisons avantageuses de traitements technologiques ont eu un impact positif sur les graines de féverole en améliorant leur efficacité alimentaire au point de devenir supérieur au tourteau de soja. Il en ressort plus globalement encore à travers cette illustration, l'effet synergique de l'invention à travers la valorisation que l'animal a pu faire de ces graines sélectionnées et traitées.

Ces résultats montrent donc que les graines de féverole issues de l'invention sont de bonnes candidates pour remplacer le tourteau de soja dans les aliments destinés aux truites. De plus, bien que les aliments aquacoles soient produits par cuisson-extrusion, faisant appel à un traitement thermique sous pression, il apparaît que préalablement, le procédé selon l'invention, appliqué aux graines de féverole entières ou dépelliculées, apporte une réelle valeur ajoutée afin d'améliorer la valeur nutritionnelle de ces graines.

### e/Essai zootechnique en porc charcutier

Dans une ferme de référence de porc en engraissement, nous avons comparé les performances de croissance de deux lots de porcs dont l'alimentation se différenciait uniquement par l'apport de la solution issue de l'invention.

Les aliments de croissance et de finition des deux lots avaient des apports iso-nutritionnels (énergie nette et acides aminés digestibles). Ladite solution a été apportée à hauteur de 10% en phase de croissance et de 5 % en phase de finition, en substitution de tourteaux protéiques et de graines oléagineuses.

Comme les valeurs nutritionnelles de la féverole utilisées pour la formulation des aliments reposaient sur les valeurs de digestibilité, l'objectif était de vérifier si les performances zootechniques des animaux allaient bien être égales, et de constater, si elles étaient supérieures, un éventuel effet synergique lié à une meilleure expression au niveau du métabolisme de l'animal.

Le tableau ci-dessous présente les données de performances techniques obtenues.

| | | Caractéristiques de l'invention | |
|---|---|---|---|
| | | Tourteau de soja | Féverole Cuite |
| | Sélection des graines | - | Oui |
| | Traitement technologique des graines | | Oui |

| | | **Caractéristiques de la ration** | |
|---|---|---|---|
| | | Tourteau de soja | Féverole Cuite |
| EM ration, kcal/kg | | Croissance : 2300 \| Finition : 2150 | |
| Lys digestible, g/kg | | Croissance : 7,5 \| Finition : 6,5 | |

| | | **Caractéristiques des matières premières testées** | |
|---|---|---|---|
| Protéine, g/100 g MS | | | 29,2 |
| Amidon, g/100 g MS | | | 41,8 |
| Tanins, g/100 g MS | | | 0,49 |
| Vicine + Convicine, g/100 g MS | | | 0,15 |
| Alpha-galactosides, g/100 g MS | | | 2,2 |
| Cellulose brute, g/100 g MS | | | 7,3 |
| NDF, g/100 g MS | | | 13,0 |
| Lectines, g/100 g MS | | | 2,4 |
| Facteurs antitrypsiques, UIT/mg | | | 3,0 |

| | | **Procédés de traitements des Graines de féverole** | |
|---|---|---|---|
| **Mélange** | | - | Non |
| **Fractionnement** | | - | Oui |
| **Préparation thermique** | | | |
| | Température | - | 60°C |
| | Humidité | - | 14 % |
| | Durée | - | 15 min |
| **Traitement thermique** | | | |
| | Température | - | 140°C |
| | Durée | - | 20 s |
| | Pression | - | 30 bars |

| | | **Caractéristiques des Graines de féverole traitées** | |
|---|---|---|---|
| EM Graine de féverole, kcal/kg | | | 3305 |
| CUD N Graine de féverole, % | | | 78 |
| Lectines, g/100g MS | | | 0,0 |
| Facteurs antitrypsiques, UTI/mg | | | 0,8 |

| | | **Performance de production des porcs** | |
|---|---|---|---|
| Gain moyen quotidien, g/j | | 773 | 804 ** |
| Indice de consommation économique | | 2,78 | 2,80 * |

Les performances techniques relevées dans cet essai révèlent une augmentation du gain moyen quotidien, du fait d'une meilleure ingestion et d'une aussi bonne valorisation en gain de poids d'un kilogramme d'aliment.

Ceci témoigne d'un effet synergique entre la bonne digestibilité des graines d'une part, et l'effet positif sur l'ingestion d'autre part, ce dernier effet pouvant être rattaché à la réduction de facteurs antinutritionnels dont les effets négatifs sur la prise alimentaire sont régulièrement rapportés, en raison des troubles digestifs qu'ils occasionnent notamment.

Comme nous l'avons évoqué précédemment, des effets postérieurs à la digestion des nutriments tels que la protéine et l'énergie peuvent se manifester chez l'animal après qu'il ait ingéré des matières premières végétales selon qu'elles sont issues ou non de l'invention. Les travaux préalables faisaient états de moindres performances de productions issues d'altération de fonctions physiologiques et/ou de digestibilité. Parmi ces altérations de la santé, des réactions allergiques peuvent se manifester. Les graines protéagineuses voient de nombreux cas documentés de réaction suite à l'ingestion de ces graines du fait d'allergènes majeurs présents au sein des graines.

### f/Essai allergénicité chez le chien

L'objectif de ce travail est d'étudier l'allergénicité de graines de féverole crues ou traitées dans différentes conditions. L'allergénicité (ou réactivité) a été évaluée par immunoblot à l'aide de sérums de chiens sensibilisés alimentaires.

Après avoir extrait les protéines des graines, et sélectionné les sérums des chiens à sensibilité alimentaire - à savoir ceux qui possèdent des immunoglobulines de type E ou IgE réactif aux graines protéagineuses - la réactivité est étudiée par immunoblot. Les protéines extraites sont incubées en présence de sérums contenant des IgE. Lorsqu'une protéine allergénique est présente, elle est fixée par les IgE du sérum et une bande spécifique apparaît sur la membrane.

| | | Caractéristiques de l'invention | | | |
|---|---|---|---|---|---|
| | | **Tourteau de soja** | **Féverole Entière Crue** | **Féverole Entière Cuite** | **Féverole Amande Cuite** |
| Sélection des graines | | - | Oui | Oui | Oui |
| Traitement technologique des graines | | | Non | Oui | Oui |

| | | **Caractéristiques des graines de féverole (sous forme entière ou dépelliculée)** | | | |
|---|---|---|---|---|---|
| Protéine, g/100 g MS | | | 29,2 | | 36,1 |
| Amidon, g/100 g MS | | | 41,8 | | 43,6 |
| Tanins, g/100 g MS | | | 0,49 | | 0,4 |
| Vicine + Convicine, g/100 g MS | | | 0,15 | | 0,3 |
| Alpha-galactosides, g/100 g MS | | | 2,2 | | 2,9 |
| Cellulose brute, g/100 g MS | | | 7,3 | | 1,4 |
| NDF, g/100 g MS | | | 13,0 | | 5,5 |
| Lectines, g/100 g MS | | | 2,4 | | 2,2 |
| Facteurs antitrypsiques, UIT/mg | | | 3,0 | | 2,1 |

| | | **Procédés de traitements des Graines de féverole** | | | |
|---|---|---|---|---|---|
| **Mélange** | | - | Non | Non | Non |
| **Fractionnement** | | - | Oui | Oui | Oui |
| **Préparation thermique** | | | | | |
| | Température | - | - | 60°C | 60°C |
| | Humidité | - | - | 14 % | 14 % |
| | Durée | - | - | 15 min | 15 min |
| **Traitement thermique** | | | | | |
| | Température | - | - | 140°C | 130°C |
| | Durée | - | - | 20 s | 20 s |
| | Pression | - | - | 30 bars | 25 bars |

| | | **Caractéristiques des Graines de féverole traitées** | | | |
|---|---|---|---|---|---|
| | | **Tourteau de soja** | **Féverole Entière Crue** | **Féverole Entière Cuite** | **Féverole Amande Cuite** |
| | Lectines, g/100g MS | | 6,7 | 0,2 | 1,3 |
| | Facteurs antitrypsiques, UTI/mg | | 6,6 | 0,8 | 2,8 |

| | | **Réactivité allergique des chiens** | | | |
|---|---|---|---|---|---|
| | Qualification de la réaction | Forte | Forte | Nulle | Nulle |
| | Immunoblot | 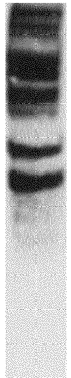 | 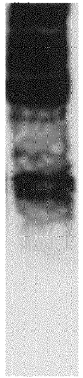 | | |

Les graines de féverole crues présentent de nombreuses bandes très intenses, c'est-à-dire une forte réactivité allergique. En revanche les graines issues de l'invention, à partir de graines entières ou bien de graines dépelliculés, ne montrent pas de réactivité (aucune bande visible). Il apparaît que la réactivité IgE initialement présente dans les graines est profondément réduite voire même supprimée à l'issue du procédé d'invention.

### g/ Essai zootechnique en vaches laitières

Dans une ferme expérimentale de vaches laitières, un essai a été conduit pour tester les effets de l'invention sur la protection des protéines de graines de féverole et de lupin dans le rumen et leur digestiblité dans l'intestin.

L'essai a été réalisé sur huit vaches Holstein en lactation, équipées d'une canule ruminale. Le schéma expérimental était un double carré latin 4×4 Les vaches recevaient deux fois par jour une ration composée de 60 % de fourrages et de 40 % de concentrés. Le fourrage était un mélange d'ensilage de maïs (33 % de la ration en MS), d'ensilage d'herbe (17 %), de foin (10 %) et de pulpe de betterave déshydratée (10,75 %). Le concentré était composé de maïs broyé et de tourteau de soja pour les régimes témoins. Le tourteau était substitué selon le traitement par les graines entières de féverole, respectivement de lupin blanc, crues (FEV-ENT-CRUE et LUP-NT-CRUE) ou bien traitées suivant l'invention (FEV-ENT-INVENTION et LUP-ENT-INVENTION) ou bien traitées suivant un procédé alternatif poussant les températures de traitement au-delà des recommandations de l'invention (FEV-ENT-ALTER et LUP-ENT-ALTER). Les régimes étaient formulés pour être iso-matière azotée totale (MAT) (146 g/kg MS) et iso-énergie nette (0,99 UFL/kg MS), et le concentré apportait 40 % de la MAT de la ration.

| | | **Caractéristiques de l'invention** | | | | | | |
|---|---|---|---|---|---|---|---|---|
| | | SOJA | FEV-ENT-CRUE | FEV-ENT-ALTER | FEV-ENT-INVENTION | LUP-ENT-CRUE | LUP-ENT-ALTER | LUP-ENT-INVENTION |
| | Sélection des graines | Tourteau de soja | Oui | Oui | Oui | Oui | Oui | Oui |
| | Traitement technologique des graines | | Non | Non | Oui | Non | Non | Oui |

| | | **Caractéristiques de la ration** | | | | | | |
|---|---|---|---|---|---|---|---|---|
| | MAT g/kg MS | 146 | | | | | | |
| | Energie Nette UFL/kg MS | 0.99 | | | | | | |
| | Protéine Digestible dans l'intestin (PDI) g/kg | 92 | 80 | 99 | 91 | 80 | 100 | 92 |
| | Balance protéique du Rumen (BalProRU) g/kg | 3,47 | 14,82 | -2,33 | 5,5 | 15,54 | -2,61 | 5,71 |
| | Protéine Digestible dans l'intestin d'origine alimentaire (PDIA) g/kg | 44 | 30 | 51 | 42 | 30 | 52 | 42 |
| | Amidon dégradable dans le rumen g/kg | 155 | 162 | 153 | 153 | 123 | 123 | 123 |
| | Lysine digestible %PDI | 6,82 | 7,18 | 7,09 | 7,1 | 6,85 | 6,51 | 6,44 |
| | Méthionine digestible %PDI | 2,53 | 2,62 | 2,29 | 2,38 | 2,67 | 2,31 | 2,42 |

| | | **Caractéris tiques des graines de féverole ou de lupin** | | | | | | |
|---|---|---|---|---|---|---|---|---|
| | | SOJA | FEV-ENT-CRUE | FEV-ENT-ALTER | FEV-ENT-INVENTION | LUP-ENT-CRUE | LUP-ENT-ALTER | LUP-ENT-INVENTION |
| Protéine, g/100g MS | | 51,6 | 29,3 | | | 33,3 | | |
| Amidon, g/100g MS | | 5,7 | 39,1 | | | - | | |
| Lipides, g/100g MS | | 1,6 | 7,0 | | | 13,3 | | |
| Tanins, g/100g MS | | 0,69 | 0,8 | | | - | | |
| Vicine + Convicine, g/100g MS | | - | 0,10 | | | - | | |
| Alcaloïdes, g/100g MS | | - | - | | | 0,02 | | |
| Alpha-galactosides, g/100g MS | | 4,0 | 2,3 | | | 0,93 | | |
| Cellulose brute, g/100g MS | | 5,9 | 10 | | | 12,9 | | |
| NDF, g/100g MS | | 12,5 | 18,7 | | | 18,3 | | |
| Lectines, g/100g MS | | - | 66,7 | | | - | | |
| Facteurs antitrypsiques, UTI/mg | | 20,0 | 2,5 | | | - | | |

| | | **Procédés de traitements des Graines** | | | | | | |
|---|---|---|---|---|---|---|---|---|
| Mélange | | - | Non | Non | Non | Non | Non | Non |
| Fractionnement | | - | Oui | Oui | Oui | Oui | Oui | Oui |
| Préparation thermique | | | | | | | | |
| | Température | - | - | 60°C | 60°C | - | 60°C | 60°C |
| | Humidité | - | - | 14 % | 14 % | - | 14 % | 14 % |
| | Durée | - | - | 15 min | 15 min | - | 15 min | 15 min |
| **Traitement thermique** | | | | | | | | |
| | Température | - | - | 160°C | 140°C | - | 160°C | 140°C |
| | Durée | - | - | 20 s | 20 s | - | 20 s | 20 s |
| | Pression | - | - | 40 bars | 30 bars | - | 30 bars | 20 bars |

| | | **Caractéristiques des Graines traitées** | | | | | | |
|---|---|---|---|---|---|---|---|---|
| Lectines, g/100g MS | | - | 66,7 | 28,6 | 13,3 | - | - | - |
| Facteurs antitrypsiques, UTI/mg | | - | 2,5 | 1,0 | 0,9 | - | - | - |
| DE1, % | | 30 | 82 | 35 | 35 | 84 | 53 | 47 |
| Acrylamide, g/100g MS | | 34 | 35 | 39 | 69 | 34 | 507 | 175 |
| CML, g/100g MS | | 0,123 | 0,008 | 0,023 | 0,017 | 0,009 | 0,029 | 0,023 |

| | | **Performances des Graines de féverole traitées** | | | | | | |
|---|---|---|---|---|---|---|---|---|
| | | SOJA | FEV-ENT-CRUE | FEV-ENT-ALTER | FEV-ENT-INVENTION | LUP-ENT-CRUE | LUP-ENT-ALTER | LUP-ENT-INVENTION |
| | Digestibilité apparente N, g/g | 0,63 (Fev) /0,66 (Lup) | 0,64 | 0,63 | 0,66 | 0,68 | 0,64 | 0,68 |
| | Acides aminés totaux, µ*M* (plasma) | 2662 (Fev) /2642 (Lup) | 2401 | 2858 | 2985 | 2608 | 2411 | 2921 |
| | Acides aminés essentiels, µ*M* (plasma) | 1034 (Fev) /956 (Lup) | 898 | 1125 | 1164 | 774 | 914 | 1024 |
| | NH3, mg/l (jus de rumen) | 119 (Fev) /120 (Lup) | 145 | 130 | 133 | 140 | 125 | 140 |
| | Rendement protéique laitier : Observé - Potentiel, g /jour | 11.3 (Fev) /-2.7 (Lup) | -65.0 | -56.9 | 5.1 | -68.6 | -67.9 | -29.7 |

Les teneurs en NH3 ruminal plus faibles avec les graines issues de l'invention qu'avec les graines crues, montrent une protection de l'azote de la dégradabilité ruminale, accrue par l'augmentation de la température ; alors que le tourteau de soja conduit aux valeurs les plus basses. Cette protection de l'azote grâce au traitement technologique est également confirmée par la dégradabilité enzymatique 1 h, qui diminue entre les graines crues et les graines issues de l'invention.

La teneur en composés de Maillard est plus importante dans les graines issues de l'invention que dans les graines crues, avec notamment un effet plus marqué sur la teneur en acrylamide et en CML pour le lupin

Par ailleurs, on remarque une teneur en CML quatre à sept fois plus élevée dans le tourteau de soja que dans les graines issues de l'invention.

Dans le carré latin féverole, la teneur en CML des fèces a été moindre avec les régimes contenant de la féverole qu'avec le régime témoin contenant du tourteau de soja. Numériquement, plus de composés de Maillard ont été retrouvés dans les fèces avec les graines issues des procédés alternatifs qu'avec les graines issues de l'invention. Cela suppose dans le cadre des procédés alternatifs, que les réactions de Maillard ont davantage atteint un stade non réversible dans la caillette, entraînant ainsi une surprotection de l'azote. Ceci est confirmé par la diminution de la digestibilité apparente de l'azote observée avec les graines issues de procédés alternatifs comparativement aux graines issues de l'invention. Aussi, la teneur plasmatique en acides aminés plus élevée avec les graines issues de l'invention en comparaison avec les graines issues de procédés alternatifs d'une part, et du tourteau de soja d'autre part, démontre la meilleure assimilation intestinale des protéines des graines issues de l'invention ; c'est ainsi qu'on observe une moindre disponibilité pour l'animal des protéines des graines issues de procédés alternatifs ou des protéines issues du tourteau de soja, car une plus forte proportion de celles-ci échapperaient non seulement à la dégradation ruminale mais également à la digestion et à l'absorption intestinale.

Ces résultats confirment que des réactions de Maillard se sont produites suite aux traitements technologiques des graines de féverole et de lupin, dans des proportions variables. Dans le cas des graines issues de l'invention, ces réactions permettent la protection de l'azote d'une trop grande dégradabilité ruminale, et sont réversibles avec le pH acide de la caillette, permettant ainsi une absorption optimale des acides aminés dans l'intestin grêle. En revanche, à haute température (160 °C), ces réactions ne sont plus aussi réversibles dans la caillette, et les protéines, ainsi « trop » protégées, ne sont plus absorbées dans l'intestin.

Enfin, en terme zootechnique, les graines issues de l'invention sont les seules à rivaliser avec le tourteau de soja étant donné qu'elles ont permis d'exprimer le potentiel de rendement protéique laitier des vaches. Ce qui n'est pas le cas des graines crues et des graines issues de procédés alternatifs.

### h/Etude d'intérêt économique du procédé selon la présente invention

Dans le but de faire cette analyse économique, on a fait usage d'un logiciel de formulation des aliments pour volailles, dûment renseigné à cet effet en termes de matières premières disponibles, de valeurs nutritionnelles des matières premières, de prix de ces matières premières et de contraintes nutritionnelles des aliments pour volailles de chair et pondeuses, à différents stades physiologiques de leur production.

C'est ainsi que, après avoir renseigné les valeurs nutritionnelles et les prix potentiels des meilleures combinaisons de l'invention, on a pu évaluer la prédisposition de l'invention à être économiquement viable.

Par cette même approche, on a également pu évaluer les prix d'intérêt des matières premières élaborées à partir des meilleures combinaisons de procédés issues de l'invention. Et de là il a été constaté que l'invention permettait tout à fait d'être économiquement pertinente, et ce d'autant plus que des contraintes de formulation liées à des cahiers des charges spécifiques sont présentes (cahiers des charges considérés relatifs à l'obligation d'avoir dans les formules d'aliments des matières premières non OGM, non importées ou d'origine locale).

Ci-dessous sont présentées trois formules alimentaires pour poulets de chair en croissance montrant la faveur économique faite à la solution issue de l'invention (un mélange de graines de féverole et de soja, à raison de 90% et 10% respectivement), du fait de sa priorité technico-économique en terme d'inclusion par optimisation dans les formules non OGM, en comparaison aux matières premières connues de l'état de l'art (le tourteau de soja et les céréales en l'occurrence).

Tableau de comparaison de trois formules d'aliments croissance non OGM pour poulet de chair : l'une sans et les deux autres avec la solution issue de l'invention.

| | **Formule Standard SANS proposition de la solution de l'invention** | **Formule Essai 1 AVEC proposition de la solution de l'invention** | **Formule Essai 2 AVEC proposition de la solution de l'invention** |
|---|---|---|---|
| **Composition des formules** | | | |
| Tourteau de soja non OGM | 21,0% | 8,3% | |
| Solution de l'invention (90% graine de féverole + 10% graine de soja) | | 13,5% | 20,0% |
| Tourteau de colza | | 6,3% | 8,0% |
| Blé | 41,9% | 45,0% | 45,0% |
| Orge | | | 11,1% |
| Maïs | 25,0% | 14,3% | 1,3% |
| Gluten de maïs | 5,2% | 5,7% | 7,6% |
| Huile de soja | 4,0% | 4,0% | 4,0% |
| Minéraux & vitamines | 2,3% | 2,3% | 2,3% |
| Acides aminés | 0,6% | 0,6% | 0,7% |

| **Caractéristiques nutritionnelles** | | | |
|---|---|---|---|
| Energie métabolisable | 3100 kcal | 3100 kcal | 3100 kcal |
| Protéine | 19,5% | 19,5% | 19,5% |
| Lysine digestible | 10,3g/kg | 10,3g/kg | 10,3g/kg |
| Calcium | 0,79% | 0,79% | 0,79% |
| Phosphore | 0,40% | 0,40% | 0,40% |
| Prix de revient | 289,5€/t | 287,1 €/t | 288,5 €/t |

On constate à travers cet exercice de formulation que la solution de l'invention s'optimise dans une formule d'aliment croissance non OGM pour poulet de chair, et rentre à hauteur de 13,5% dans la formule essai 1. Il en résulte une inclusion de tourteau de colza à hauteur de 6,3% et une baisse significative de tourteau de soja et de maïs, respectivement de 12,7% et 10,3%.

Aussi, si on cherche à retirer totalement le tourteau de soja non OGM de la formule essai 2, la solution de l'invention rentre à 20% alors que le prix de revient de la formule reste inférieur de 1€/t en comparaison à la formule standard initiale.

Cette étude de formulation apporte la démonstration de la viabilité technico-économique de l'invention.

Enfin, en terme d'applications, le procédé objet de l'invention vise à favoriser l'insertion des graines protéagineuses dans l'alimentation des monogastriques en substitution d'autres sources de protéines telles que le tourteau de soja ou autres tourteaux importés, et ainsi répondre aux demandes d'éleveurs d'avoir plus d'autonomie protéique à l'échelle des territoires, et aux demandes des consommateurs d'avoir accès à des produits d'élevages plus durables, nourris sans OGM, et dont l'alimentation est d'origine locale.

Le domaine d'application du présent procédé peut concerner deux types d'usages pour l'élevage :

### Usage pour l'élaboration d'une matière première

Elaboration d'un concentré à base de protéagineux, devenant une matière première, en vue de son incorporation dans l'aliment complet ou complémentaire des animaux monogastriques et destiné aux fabricants d'aliments industriels et/ou à la ferme. Dans ce cas, l'incorporation minimale des dites graines sélectionnées est de 20 %, préférentiellement de 40 %.

Les autres matières premières composant le concentré, peuvent subir tout ou partie des étapes de ladite invention et ce d'autant plus si celle-ci confère un avantage à ces matières premières.

Ainsi les matières premières à privilégier sont les graines ou tout autre produit amylacé tel que les céréales, et les graines oléagineuses de manière non limitative.

### Usage pour l'élaboration d'un aliment

Elaboration d'un aliment complet ou complémentaire de céréales et destiné aux éleveurs pour l'alimentation de leurs animaux monogastriques. Dans cet autre cas, l'incorporation minimale des dites graines sélectionnées est de 5 %, préférentiellement de 10 %.

Aussi, les solutions alimentaires issues de l'invention se distinguent selon les besoins des fabricants d'aliments et des éleveurs, selon qu'ils s'agissent d'un positionnement pour des filières non OGM, de production locale, française ou sans soja d'une part, ou bien pour la filière appelée "Bleu Blanc Coeur" (marque déposée) d'autre part.

En effet, dans le cas de besoins de protéines françaises, on privilégie de traiter la féverole en association avec de la graine de soja métropolitaine. Alors que pour répondre aux cahiers des charges "Bleu-Blanc-Coeur, on a tout intérêt à l'associer à la graine de lin.

Dans le premier cas, la graine de soja permet de concentrer la teneur en protéine du produit. Dans le second cas, la graine de lin apporte les Oméga 3 tracés et garantis. Cette démarche a l'intérêt, dans le cadre d'un usage par les fabricants d'aliments, de ne pas nécessiter une cellule de stockage supplémentaire, mais de remplacer un autre produit à base de lin, lequel est la souvent associé à une matière première support sans grand intérêt technique (son de blé, céréales...).

### Voici un exemple de solutions :

1/ Formules pour les démarches de filières non OGM / protéine locale :
   A base de 90% de graines de féverole, et de 10% de graines de soja ;
   A base de 70% de graines de féverole, et de 30% de graines de soja.
2/ Formules pour la démarche de filière Bleu-Blanc-Coeur :
   À base de 75% de graines de féverole, et de 25% de graines de lin ;
   A base de 50% de graines de féverole, et de 50% de graines de lin ;
   A base de 25% de graines de féverole, et de 75% de graines de lin.

L'usage de graines issues de l'invention peuvent trouver une valorisation chez les animaux domestiques et chez les ruminants. Bien qu'elles aient été élaborées en vue d'une alimentation par les animaux monogastriques de rente, les graines traitées conformément à l'invention sont tout à fait utilisables dans l'alimentation des animaux domestiques comme les chiens et les chats, et des ruminants.

De manière avantageuse pour un usage par les ruminants, on peut retenir l'intérêt d'utiliser d'une part des enzymes de dégradation des glucides et d'autre part des sources de sucres dits réducteurs. En effet, au-delà de l'effet thermique, une manière de protéger la protéine de sa dégradabilité ruminale tout en améliorant sa digestibilité intestinale consiste : 1) à l'étape de préparation hydrothermique et enzymatique du procédé, d'ajouter des enzymes capables d'hydrolyser les glucides en unités de glucose ou autres sucres réducteurs plus simples et réactifs envers la protéine ; et / ou 2) à l'étape complémentaire reposant sur l'utilisation de matière première additionnelle, de retenir des sources de sucres plus ou moins réducteurs.

L'homme de l'art sait que la valorisation des graines protéagineuses chez les ruminants passe notamment par une réduction de la dégradabilité ruminale de leur protéine, et que l'une des façons d'y arriver consiste à provoquer les premières étapes de la réaction de Maillard, entre les fonctions amines des protéines et les fonctions réductrices des sucres.

L'invention propose de créer des conditions nouvelles à la mise en oeuvre de ces réactions, lesquelles sont réversibles, ce qui permet une excellente digestibilité intestinale des protéines.

Il est aussi intéressant d'utiliser les graines issues de cette invention dans l'optique d'une alimentation par les animaux domestiques. D'une part, les graines protéagineuses ainsi préparées apportent une source diversifiée et hautement digestible de protéine et d'énergie, dont les facteurs antinutritionnels ont été réduits et dont la source de protéine a un potentiel allergène réduit. En effet, de par les réactions biochimiques à l'une des étapes thermique du procédé, l'Homme de l'art sait que le risque allergène est significativement réduit (Franck et al, 2008).

Enfin, l'usage dudit procédé peut s'étendre également aux marchés de l'alimentation humaine du fait de la valeur ajoutée nutritionnelle qu'il apporte aux protéines végétales dont les apports pour l'homme sont aujourd'hui appelés à être augmentés dans l'alimentation des populations des pays développés, et ce d'autant plus que le risque allergène de ces protéines végétales est diminué.

Il est en effet recommandé par l'Anses (Agence nationale de sécurité sanitaire de l'alimentation) de rétablir dans l'alimentation de l'homme l'équilibre des sources de protéines entre les protéines animales et végétales, et ainsi de passer d'un ratio de 70/30 à un ratio de 50/50.

Les limites nutritionnelles des graines protéagineuses, autrement appelées légumineuses à graines, connues chez l'animal monogastrique, sont les mêmes chez l'homme monogastrique. C'est pourquoi l'on considère que cette invention vise finalement tout autant les filières de production animale (monogastrique et ruminante) que les filières de transformations des protéines végétales à destination directe de l'alimentation humaine.

Ci-après sont détaillées les références bibliographiques citées dans le présent texte :
- Bond., 1976. Journal of Agricultural Science 86, 561-566.
- Bourin et al., 2015. JRA.
- Carré et al., 1986. J. Sci. Food Agric., 37, 341-351
- Carre et al., 2013. Anim. 7, 1246-1258.
- Champ et al., 1993. INRA Prod. Anim. 6, 185-198.
- Choubert et al., 1982. Aquaculture 29, 185-189.
- Crépon et al., 2010. Field Crops Research, 115(3), 329-339.
- Cuq et al., 2003. Food Sci Tech, 37,759-766.
- Delanoue et al., 2015. Renc. Rech. Ruminants, 22, 171-178.
- Diaz et al., 2006. Italian J. Anim. Sci., 5 (1): 43-53
- Dixon et al., 1992. Nutr. Res. Rev., 5: 19-43
- Duc et al., 1999. Journ. of Agr. Sci, 133(02), 185-196.
- Fru-Nji et al., 2007. The Journal of Poultry Science, 44(1), 34-41.
- Garrido et al., 1988. In : Recent adv of rech in antinutritional factors in legume seeds, p. 297-300.
- Gatel, 1994. Anim. Feed Sci. Technol. 45, 317-348.
- Gatta et al., 2013. Arch. Anim. Nutr., 67 (3): 235-247
- Gourdouvelis et al., 2012. Journ Agr Sci and Technology A 2.
- Guillaume et al., 1977. British Poultry Science 18, 573-583
- Hayashi et al., 1989. A gr. Biol. Chem. 52:2543-2544.
- Jezierny et al., 2010. Anim. Feed Sci. Technol. 157, 111-128.
- Kaysi et al., 1992. INRA Prod. Anim, 5(1), 3-17.
- Keetels, 1995. Landbouwuniversiteit te Wageningen.
- Khamassi et al., 2013. Plant Genetic Resources 11, 250-257.
- Laplace et al., 1994. Livestock Production Science, 40, 313-328.
- Leclercq et al., 1989. INRA Prod. Anim. 2, 129-136.
- Lessire, 2001. INRA Prod. Anim. 14, 365-370.
- Leterme et al., 1998. Proc. 3rd Int. Workshop on Antinutritional factors in Legume Seeds and Rapeseed. EAAP Publication no. 93, 121-124
- Liener et al., 1986. Eds Academic Press, Olando, 600pp.
- Liener, 1979. J. Am. Oil Chemist's Soc., 56, 121-129.
- Magrini et al., 2016. Ecological Economics, 126, 152-162.
- Messéan et al., 2014. Quae.
- Muduuli et al, 1981. Can Jour of Animal Science, 61(3), 757-764.
- Muduuli et al., 1982. British Journal of Nutrition, 47, 53-60
- Myer et al., 2001. In: Swine Nutrition pp. 1-26.
- Noblet et al., 1989. INRA Editions, Paris, 106p.
- Olaboro et al., 1981. J Sci Food Agric 32, 1163-1171.
- Opazo et al., 2012. PloS one 7, e44783.
- Perrot et al. 1995. Inra Prod. Anim., 8 (3): 151-164
- Písaříková et al., 2009. Acta Veterinaria Brno 78 (3): 399-409
- Saini, 1989. Recent Advances of Research in Antinutritional Factors in Legume Seeds. Pudoc, Wageningen, pp. 329-341
- Sauvant et al., 2002: Tables de composition et de valeur nutritive des matières premières destinées aux animaux d'élevage: porcs, volailles, bovins, ovins, caprins, lapins, chevaux, poissons. INRA.
- Schmidt et al., 2009. Poult Sci 88, 2610-2619.
- Schneider et al., 2017. OCL
- Svihus et al., 2005. Anim Feed Sci Technology, 122(3): 303-320.
- Svihus, 2006. Avian gut function in health and disease, 28:183-194.
- Terres Inovia, 2016. www.terresinovia.fr/feverole/cultiver-de-la-feverole/varietes/print.pdf?print=1, consulté le 2 mars 2017.
- Terres Univia, 2016. http://www.terresinovia.fr/fileadmin/cetiom/kiosque/guides_fev erole/guide_Feverole 2016/Feverole 2016 atouts Terres-Inovia.pdf, consulté le 20 mai 2016.
- Terres Univia, 2016. http: //www.terresunivia.fr/sites/default/files/articles/publicatio ns/marches/terres-univia_chiffres-cles-legumineuses.pdf. Consulté le 20 mars 2016.
- Terries Inovia, 2016. http://www.terresinovia.fr/debouches-chiffres/transformation-desgraines/usines -et-filieres-courtes/, consulté le 25 juin 2017.
- Van Der Poel et al. 1977. In : "Protein quality for leguminous crops »;. EUR 5686 EN, p. 162-179.
- Zduncryk et al., 1996. J. Anim. Feed Sci., 5: 281-288
- Zuidhof et al., 2014. Poult Sci 93, 2970-2982.
- AFNOR 2005. ISO 15914:2004.
- Akraïm et al., 2006. Anim. Res. 55, 261-271
- Behnke, 2001. Feed Tech, 5(4):19-22.
- Benchaar et al.,1992. Première conférence européenne sur les protéagineux, Angers, France, 491-492.
- Chesneau et al., 2009. Journ. Rech. Porcine, 41, 63-64.
- Enjalbert et al., 2008. Renc. Rech. Ruminants, 15.
- Hoseney, 1994. Principles of cereal science and technology. 2.ed. St. Paul: AACC, 1994. 378p.
- Hurtaud et al., 2006. Renc. Rech. Ruminants, 13, 332.
- M. Champ et al., 1993, 6 (3), pp.185-198.
- Mariotti et al., 2005. Starch - Starke, 57 (11), 564-572
- Martin et al., 2008. J Anim Sci. 86 (10) : 2642-50
- Noblet et al., 2008. Journ. Rech. Porcine, 40, 203-208.
- Normand et al., 2005. Renc. Rech. Ruminants, 12,359-366
- Pan et al., 2017. Food Hydrocolloids, 66, 227-236.
- Perrot, 1995. INRA Prod. Anim., 8, 151-164
- Toullec et al., 1992. Première conférence européenne sur les protéagineux. Angers, France, 497-498.
- Wang et al., 2013. Food & Function, 4(11), 1564-1580
- Wang et al., 2016. Food & Function, 7(4), 407e-418.
- Wang et al., 2017b. Journal of Agricultural and Food Chemistry, 65(1), 156-166
- Zhang et al., 2003. Journal of Agricultural and Food Chemistry, 51(9), 2801-2805

## Revendications

1. Procédé de traitement de graines protéagineuses en vue d'améliorer leur valorisation à titre d'aliments, notamment pour les animaux, ces graines étant choisies parmi l'une au moins des graines suivantes : féverole (*Vicia fava L.*)*,* pois (*Pisum sativum L.*)*,* lupin blanc (*Lupinus albus L.*)*,* lupin bleu (*Lupinus angustifolius L*) et lupin jaune (*Lupinus luteus L*)*,*
**caractérisé par le fait qu'**il comporte les étapes successives suivantes :
a) utilisation de graines d'au moins une des espèces végétales précitées, à la condition que ces graines présentent une teneur en protéine, et/ou une teneur en amidon, et/ou une teneur en matière grasse, de valeur supérieure ou égale à celle indiquée dans le tableau ci-dessous :
| | Teneur supérieure à | | |
|---|---|---|---|
| Composés Nutritionnels | Protéine (g/100g MS) | Amidon (g/100g MS) | Matière grasse (g/100g MS) |
| Féverole | 28 | 39 | |
| *Vicia fava L.* | | | |
| Pois | 22 | 45 | |
| *Pisum sativum L.* | | | |
| Lupin blanc | 35 | | 8 |
| *Lupinus albus L.* | | | |
| Lupin bleu | 31 | | 5.5 |
| *Lupinus angustifolius L.* | | | |
| Lupin jaune | 38 | | 5.0 |
| *Lupinus luteus L.* | | | |
Et, au moins un des composés du groupe suivant : facteur antinutritionnel (FAN), cellulose brute, fibres insolubles dans les détergents neutres (NDF), selon une teneur inférieure à celle indiquée dans le tableau ci-dessous :
| Espèces | FAN/Cellulose brute/NDF | Teneur inférieure à |
|---|---|---|
| | | (g/100g MS) |
| Féverole | Tanins | 0.3 |
| *Vicia fava L.* | Vicine, convicine | 0.5 |
| | Alpha -galactosides | 2.5 |
| | Cellulose Brute | 10 |
| | NDF | 18 |
| Pois | Tanins | 0.01 |
| *Pisum sativum L.* | Alpha -galactosides | 5 |
| | Cellulose Brute | 7.5 |
| | NDF | 18 |
| Lupin blanc | Alcaloïdes | 0.1 |
| *Lupinus albus L.* | Alpha -galactosides | 10 |
| | Cellulose Brute | 16 |
| | NDF | 25 |
| Lupin bleu | Alcaloïdes | 0.2 |
| *Lupinus angustifolius L.* | Alpha -galactosides | 9 |
| | Cellulose Brute | 18 |
| | NDF | 29 |
| Lupin jaune | Alcaloïdes | 0.3 |
| *Lupinus luteus L.* | Alpha -galactosides | 12 |
| | Cellulose Brute | 18 |
| | NDF | 29 |
b) Mise sous une pression minimale de 10 bars des graines de l'étape a), pendant une durée supérieure à 10 secondes, jusqu'à l'obtention d'une température supérieure à 80°C ;
et/ou b bis) chauffage des graines, pendant une durée minimum de 15 minutes, préférentiellement de 30 minutes à 2 heures, à une température supérieure à 80°C, préférentiellement entre 90 et 150°C.

2. Procédé selon la revendication 1, **caractérisé par le fait que**, après la mise en oeuvre de ladite étape a), on procède à leur fractionnement.

3. Procédé selon la revendication 1, **caractérisé par le fait que**, après la mise en oeuvre de ladite étape a) et dès lors que l'on a affaire à des graines d'espèce différente et/ou de composition différente en protéine, en amidon, en matière grasse, en facteur antinutritionnel, en cellulose brute, ou en fibres insolubles dans les détergents neutres (NDF), on procède à leur mélange et à leur fractionnement, ou à leur fractionnement puis à leur mélange.

4. Procédé selon l'une des revendications 1 à 3, **caractérisé par le fait que** préalablement à l'étape b), on procède à une étape thermique de préparation des graines avec de la vapeur et/ou un liquide à base d'eau, jusqu'à obtention d'une température comprise entre 30 et 90°C et une humidité supérieure à 12%, préférentiellement 15%, pendant une durée supérieure à 2 minutes, préférentiellement 15 minutes.

5. Procédé selon la revendication 4, **caractérisé par le fait que** l'étape thermique de préparation est réalisée en présence d'au moins une enzyme exogène identifiée parmi les familles suivantes : arabinofuranosidases, béta-glucanases, cellulases, glucoamylases, pectinases, pectine methyl estérases, phytases, protéases, xylanases et, préférentiellement, xylanases, beta-glucanases et pectinases, ladite enzyme exogène ayant été préalablement ajoutée aux graines ou au mélange.

6. Procédé selon la revendication 5, **caractérisé par le fait que**, à l'étape thermique de préparation en présence d'enzyme exogène, on se place à une humidité supérieure à 15%, préférentiellement 25%, et on fait durer la préparation pendant au moins 15 minutes, préférentiellement 60 minutes.

7. Procédé selon l'une des revendications 4 à 6, **caractérisé par le fait que**, lors de la mise en oeuvre de ladite étape thermique de préparation, on procède à une agitation du mélange.

8. Procédé selon l'une des revendications 3 à 7, **caractérisé par le fait que**, lorsque l'on procède à un mélange puis à un fractionnement, on procède à un nouveau mélange après ledit fractionnement.

9. Procédé selon l'une des revendications 2 à 8, **caractérisé par le fait que** l'on poursuit ledit fractionnement jusqu'à ce qu'au moins 90% desdites graines aient une granulométrie inférieure à 2000 micromètres, de préférence inférieure à 1500 micromètres.

10. Procédé selon l'une des revendications 3 à 9, **caractérisé par le fait que** ladite étape b bis) est mise en oeuvre sur ledit mélange.

11. Procédé selon l'une des revendications précédentes, **caractérisé par le fait que** l'on interrompt la mise en oeuvre de l'étape b), respectivement b bis) dès lors que la teneur de l'un au moins des facteurs antinutritionnels du tableau ci-dessous a une valeur inférieure à celle également indiquée ci-dessous :
| Espèce | Nature des Facteurs Antinutritionnels | Teneur inférieure à |
|---|---|---|
| Féverole | Lectines | 0.10 |
| | (g/100 g de matière brute) | |
| *Vicia fava L.* | Facteurs antitrypsiques (UTI/mg de matière brute) | 1.50 |
| Pois | Lectines | 0.10 |
| | (g/100 g de matière brute) | |
| *Pisum sativum L.* | Facteurs antitrypsiques (UTI/mg de matière brute) | 1.50 |

12. Procédé selon l'une des revendications précédentes, **caractérisé par le fait que**, à la suite de l'étape a), on procède au décorticage et/ou au dépelliculage desdites graines.

13. Procédé selon l'une des revendications 1 à 12, **caractérisé par le fait que**, après ladite étape a) ou après ladite étape de décorticage et/ou de dépelliculage, on procède à un fractionnement spécifique et une séparation desdites graines selon un critère choisi parmi la taille, le poids, la forme, la densité, un paramètre aérodynamique, colorimétrique ou électrostatique.

14. Procédé selon l'une des revendications précédentes, **caractérisé par le fait que**, à la suite de l'étape a), ou en amont, on procède à un triage desdites graines selon un critère choisi parmi la taille, le poids, la forme, la densité, un paramètre aérodynamique, colorimétrique ou électrostatique.

15. Procédé selon l'une des revendications précédentes, **caractérisé par le fait qu'**on mélange auxdites graines au moins une autre matière première choisie dans le groupe constitué par les graines oléagineuses et leurs co-produits, les huiles, les co-produits de graines protéagineuses, les céréales et leurs coproduits, les sources de glucides simples et complexes, ainsi que les tourteaux d'oléagineux.

16. Procédé selon la revendication précédente, **caractérisé par le fait que** ladite matière première est une source de lipide, préférentiellement une graine oléagineuse.

17. Procédé selon l'une des revendications précédentes, **caractérisé par le fait qu'**il comporte une étape ultime au cours de laquelle on refroidit lesdites graines.

## Patentansprüche

1. Verfahren zur Behandlung von Proteinsamen zur Verbesserung ihrer Verwertung als Nahrungsmittel, insbesondere für die Tiere, wobei diese Samen aus mindestens einem der folgenden Samen ausgewählt sind: Favabohnen (*Vicia fava L.*)*,* Erbsen (*Pisum sativum L.*)*,* Weiße Lupine (*Lupinus albus L.*)*,* Blaue Lupine (*Lupinus angustifolius L.*) und Gelbe Lupine (*Lupinus luteus L.),*
**dadurch gekennzeichnet, dass** es die folgenden aufeinanderfolgenden Schritte umfasst:
a) Verwendung von Samen mindestens einer der oben genannten pflanzlichen Spezies, sofern diese Samen einen Protein- und/oder Stärkegehalt und/oder einen Fettgehalt aufweisen, der mindestens dem in der folgenden Tabelle angegebenen Wert entspricht:
| | Gehalt größer als | | |
|---|---|---|---|
| Nährstoffverbindungen | Protein (g/100 g TM) | Stärke (g/100 g TM) | Fett (g/100 g TM) |
| Favabohne | 28 | 39 | |
| *Vicia fava L.* | | | |
| Erbse | 22 | 45 | |
| *Pisum sativum L.* | | | |
| Weiße Lupine | 35 | | 8 |
| *Lupinus albus L.* | | | |
| Blaue Lupine | 31 | | 5,5 |
| *Lupinus angustifolius L.* | | | |
| Gelbe Lupine | 38 | | 5,0 |
| *Lupinus luteus L.* | | | |
und mindestens eine der Verbindungen der folgenden Gruppe: antinutritiver Faktor (FAN), Rohfaser, in neutralen Reinigungsmitteln nicht lösliche Fasern (NDF) in einem geringeren Gehalt als in der folgenden Tabelle angegeben:
| Spezies | FAN/Rohfaser/NDF | Gehalt kleiner als |
|---|---|---|
| | | (g/100 g TM) |
| Favabohne | Tannine | 0,3 |
| *Vicia fava L.* | Vicin, Convicin | 0,5 |
| | Alpha-Galactoside | 2,5 |
| | Rohfaser | 10 |
| | NDF | 18 |
| Erbse | Tannine | 0,01 |
| *Pisum sativum L.* | Alpha-Galactoside | 5 |
| | Rohfaser | 7,5 |
| | NDF | 18 |
| Weiße Lupine | Alkaloide | 0,1 |
| *Lupinus albus L.* | Alpha-Galactoside | 10 |
| | Rohfaser | 16 |
| | NDF | 25 |
| Blaue Lupine | Alkaloide | 0,2 |
| *Lupinus angustifolius L.* | Alpha-Galactoside | 9 |
| | Rohfaser | 18 |
| | NDF | 29 |
| Gelbe Lupine | Alkaloide | 0,3 |
| *Lupinus luteus L.* | Alpha-Galactoside | 12 |
| | Rohfaser | 18 |
| | NDF | 29 |
b) Versetzen der Samen von Schritt a) unter einen Druck von mindestens 10 bar während einer Dauer von über 10 Sekunden bis zum Erhalten einer Temperatur von über 80 °C;
und/oder ba) Erhitzen der Samen während einer Dauer von mindestens 15 Minuten, vorzugsweise von 30 Minuten bis 2 Stunden, auf eine Temperatur von über 80 °C, vorzugsweise zwischen 90 und 150 °C.

2. Verfahren nach Anspruch 1, **dadurch gekennzeichnet, dass** nach Durchführung von Schritt a) deren Fraktionierung vorgenommen wird.

3. Verfahren nach Anspruch 1, **dadurch gekennzeichnet, dass** nach Durchführung von Schritt a) und sofern es sich um Samen einer unterschiedlichen Spezies und/oder unterschiedlichen Zusammensetzung hinsichtlich Protein, Stärke, Fett, antinutritiver Faktor, Rohfaser oder in neutralen Reinigungsmitteln nicht löslichen Fasern (NDF) handelt, diese gemischt und fraktioniert oder fraktioniert und dann gemischt werden.

4. Verfahren nach einem der Ansprüche 1 bis 3, **dadurch gekennzeichnet, dass** vor Schritt b) ein thermischer Schritt der Vorbereitung der Samen mit Dampf und/oder einer Flüssigkeit auf Wasserbasis durchgeführt wird, bis eine Temperatur zwischen 30 und 90 °C und eine Feuchtigkeit von über 12 %, vorzugsweise 15 %, während einer Dauer von über 2 Minuten, vorzugsweise 15 Minuten, erreicht wird.

5. Verfahren nach Anspruch 4, **dadurch gekennzeichnet, dass** der Schritt der thermischen Vorbereitung in Gegenwart von mindestens einem exogenen Enzym durchgeführt wird, das zu den folgenden Familien gehört: Arabinofuranosidasen, Beta-Glucoanasen, Cellulasen, Glucoamylasen, Pektinasen, Pektinmethylesterasen, Phytasen, Proteasen, Xylanasen und vorzugsweise Xylanasen, Beta-Glucoanasen und Pektinasen, wobei das exogene Enzym zuvor den Samen oder dem Gemisch hinzugefügt wurde.

6. Verfahren nach Anspruch 5, **dadurch gekennzeichnet, dass** beim Schritt der thermischen Vorbereitung in Gegenwart eines exogenen Enzyms eine Feuchtigkeit von über 15 %, vorzugsweise 25 %, entsteht und dass die Vorbereitung mindestens 15 Minuten, vorzugsweise 60 Minuten, dauert.

7. Verfahren nach einem der Ansprüche 4 bis 6, **dadurch gekennzeichnet, dass** das Gemisch bei der Durchführung des Schritts der thermischen Vorbereitung gerührt wird.

8. Verfahren nach einem der Ansprüche 3 bis 7, **dadurch gekennzeichnet, dass**, wenn gemischt und dann fraktioniert wird, nach der Fraktionierung erneut gemischt wird.

9. Verfahren nach einem der Ansprüche 2 bis 8, **dadurch gekennzeichnet, dass** die Fraktionierung so lange fortgesetzt wird, bis mindestens 90 % der Samen eine Korngröße von weniger als 2000 Mikrometer, vorzugsweise weniger als 1500 Mikrometer, haben.

10. Verfahren nach einem der Ansprüche 3 bis 9, **dadurch gekennzeichnet, dass** der Schritt ba) bei dem Gemisch durchgeführt wird.

11. Verfahren nach einem der vorhergehenden Ansprüche, **dadurch gekennzeichnet, dass** die Durchführung von Schritt b) beziehungsweise ba) unterbrochen wird, sobald der Gehalt von mindestens einem der antinutritiven Faktoren in der folgenden Tabelle niedriger als der ebenfalls unten angegebene Wert ist:
| Spezies | Art der antinutritiven Faktoren | Gehalt kleiner als |
|---|---|---|
| Favabohne | Lektine | 0,10 |
| | (g/100 g Rohmaterial) | |
| *Vicia fava L.* | Antitrypsische Faktoren (UTI/mg Rohmaterial) | 1,50 |
| Erbse | Lektine | 0,10 |
| | (g/100 g Rohmaterial) | |
| *Pisum sativum L.* | Antitrypsische Faktoren (UTI/mg Rohmaterial) | 1,50 |

12. Verfahren nach einem der vorangehenden Ansprüche, **dadurch gekennzeichnet, dass** nach Schritt a) das Schälen und/oder das Enthülsen der Samen vorgenommen wird.

13. Verfahren nach einem der Ansprüche 1 bis 12, **dadurch gekennzeichnet, dass** nach dem Schritt a) oder nach dem Schritt des Schälens und/oder Enthülsens eine spezifische Fraktionierung und eine Trennung der Samen nach einem Kriterium durchgeführt wird, das aus der Größe, dem Gewicht, der Form, der Dichte, einem aerodynamischen, kolorimetrischen oder elektrostatischen Parameter ausgewählt ist.

14. Verfahren nach einem der vorangehenden Ansprüche, **dadurch gekennzeichnet, dass** nach dem Schritt a) oder davor eine Sortierung der Samen nach einem Kriterium durchgeführt wird, das aus der Größe, dem Gewicht, der Form, der Dichte, einem aerodynamischen, kolorimetrischen oder elektrostatischen Parameter ausgewählt ist.

15. Verfahren nach einem der vorangehenden Ansprüche, **dadurch gekennzeichnet, dass** die Samen mit mindestens einem anderen Rohstoff gemischt werden, der aus der Gruppe ausgewählt ist, die aus den Ölsaaten und deren Nebenerzeugnissen, den Ölen, den Nebenprodukten der Proteinsamen, den Getreiden und ihren Nebenprodukten, den einfachen und komplexen Kohlenhydratquellen sowie den Ölkuchen besteht.

16. Verfahren nach vorangehendem Anspruch, **dadurch gekennzeichnet, dass** der Rohstoff eine Lipidquelle, vorzugsweise eine Ölsaat, ist.

17. Verfahren nach einem der vorangehenden Ansprüche, **dadurch gekennzeichnet, dass** es einen letzten Schritt aufweist, bei dem die Samen abgekühlt werden.

## Claims

1. Method for treating high-protein grains with a view to improving the use thereof as food, in particular for animals, these grains being chosen from at least one of the following grains: fava bean (*Vicia fava L.*)*,* peas (*Pisum sativum L.*)*,* white lupin (*Lupinus albus L.*)*,* blue lupin (*Lupinus angustifolius L*.) and yellow lupin (*Lupinus luteus L*.*),*
**characterised by** the fact that it comprises the following consecutive steps:
(a) using grains of at least one of the aforementioned plant species, with the condition that these grains have a protein and/or starch and/or fat content of a value greater than or equal to that indicated in the table below:
| | Content greater than | | |
|---|---|---|---|
| Nutritional Compounds | Protein (g/100g DM) | Starch (g/100g DM) | Fat (g/100g DM) |
| Fava bean | 28 | 39 | |
| *Vicia fava L.* | | | |
| Peas | 22 | 45 | |
| *Pisum sativum L.* | | | |
| White lupin | 35 | | 8 |
| *Lupinus albus L.* | | | |
| Blue lupin | 31 | | 5.5 |
| *Lupinus angustifolius L.* | | | |
| Yellow lupin | 38 | | 5.0 |
| *Lupinus luteus L.* | | | |
And, at least one of the compounds of the following group: anti-nutritional factor (ANF), crude fibre, neutral detergent insoluble fibres (NDF), with a content lower than that indicated in the table below:
| Species | ANF/Crude fibre/NDF | Content less than |
|---|---|---|
| | | (g/100g DM) |
| Fava bean | Tanins | 0.3 |
| *Vicia fava L.* | Vicine, convicine | 0.5 |
| | Alpha-galactosides | 2.5 |
| | Crude Fibre | 10 |
| | NDF | 18 |
| Peas | Tanins | 0.01 |
| *Pisum sativum L.* | Alpha-galactosides | 5 |
| | Crude Fibre | 7.5 |
| | NDF | 18 |
| White lupin | Alkaloids | 0.1 |
| *Lupinus albus L.* | Alpha-galactosides | 10 |
| | Crude Fibre | 16 |
| | NDF | 25 |
| Blue lupin | Alkaloids | 0.2 |
| *Lupinus angustifolius L.* | Alpha-galactosides | 9 |
| | Crude Fibre | 18 |
| | NDF | 29 |
| Yellow lupin | Alkaloids | 0.3 |
| *Lupinus luteus L.* | Alpha-galactosides | 12 |
| | Crude Fibre | 18 |
| | NDF | 29 |
b) Placing grains of step a) under a minimum pressure of 10 bar, for a duration of more than 10 seconds, until obtaining a temperature higher than 80°C;
and/or b bis) heating the grains, for a minimum duration of 15 minutes, preferably from 30 minutes to 2 hours, at a temperature higher than 80°C, preferably between 90 and 150°C.

2. Method according to claim 1, **characterised by** the fact that, after the implementation of said step a), they are fractionated.

3. Method according to claim 1, **characterised by** the fact that, after the implementation of said step a) and as soon as grains of different species and/or different composition of protein, starch, fat, anti-nutritional factor, crude fibre, or neutral detergent insoluble fibres (NDF) are handled, they are mixed and fractionated, or fractionated then mixed.

4. Method according to one of claims 1 to 3, **characterised by** the fact that prior to step b), a thermal step of preparing the grains is carried out with steam and/or a water-based liquid, until obtaining a temperature of between 30 and 90°C and humidity greater than 12%, preferably 15%, for a duration of more than 2 minutes, preferably 15 minutes.

5. Method according to claim 4, **characterised by** the fact that the thermal preparation step is carried out in the presence of at least one exogenous enzyme identified from the following families: arabinofuranosidases, beta-glucanases, cellulases, glucoamylases, pectinases, pectin methyl esterases, phytases, proteases, xylanases and, preferably, xylanases, beta-glucanases and pectinases, said exogenous enzyme having been previously added to the grains or mixture.

6. Method according to claim 5, **characterised by** the fact that, in the thermal preparation step in the presence of exogenous enzyme, the humidity is greater than 15%, preferably 25%, and the preparation is made to last for at least 15 minutes, preferably 60 minutes.

7. Method according to one of claims 4 to 6, **characterised by** the fact that, during the implementation of said thermal preparation step, the mixture is stirred.

8. Method according to one of claims 3 to 7, **characterised by** the fact that, when a mixture is mixed and then fractionated, a new mixture is made after said fractionation.

9. Method according to one of claims 2 to 8, **characterised by** the fact that said fractionation is continued until at least 90% of said grains have a particle size of less than 2000 micrometres, preferably less than 1500 micrometres.

10. Method according to one of claims 3 to 9, **characterised by** the fact that said step b bis) is implemented on said mixture.

11. Method according to one of the preceding claims, **characterised by** the fact that the implementation of step b), respectively b bis) is interrupted as soon as the content of at least one of the anti-nutritional factors in the table below has a value lower than that also indicated below:
| Species | Nature of Anti-Nutritional Factors | Content less than |
|---|---|---|
| Fava bean | Lectins | 0.10 |
| | (g/100 g crude material) | |
| *Vicia fava L.* | Antitrypsic factors (TIU/mg crude material) | 1.50 |
| Peas | Lectins | 0.10 |
| | (g/100 g crude material) | |
| *Pisum sativum L.* | Antitrypsic factors (TIU/mg crude material) | 1.50 |

12. Method according to one of the preceding claims, **characterised by** the fact that, following step a), said grains are husked and/or dehulled.

13. Method according to one of claims 1 to 12, **characterised by** the fact that, after said step a) or after said husking and/or dehulling step, a specific fractionation and separation of said grains is carried out according to a criterion chosen from size, weight, shape, density, an aerodynamic, colorimetric or electrostatic parameter.

14. Method according to one of the preceding claims, **characterised by** the fact that, following step a), or upstream, said grains are sorted according to a criterion chosen from size, weight, shape, density, an aerodynamic, colorimetric or electrostatic parameter.

15. Method according to one of the preceding claims, **characterised by** the fact that said grains are mixed with at least one other raw material selected from the group consisting of oilseeds and their co-products, oils, high-protein grain co-products, cereals and their co-products, sources of simple and complex carbohydrates, and oilseed meals.

16. Method according to the preceding claim, **characterised by** the fact that said raw material is a lipid source, preferably an oilseed.

17. Method according to one of the preceding claims, **characterised by** the fact that it comprises a final step in which said grains are cooled.
